(19) Europäisches Patentamt
European Patent Office
Office européen des brevets

(11) **EP 4 450 966 A1**

(12) **EUROPEAN PATENT APPLICATION**
published in accordance with Art. 153(4) EPC

(43) Date of publication:
**23.10.2024  Bulletin 2024/43**

(21) Application number: **22907038.8**

(22) Date of filing: **26.10.2022**

(51) International Patent Classification (IPC):
*G01N 29/14* (2006.01)        *B33Y 10/00* (2015.01)
*B33Y 30/00* (2015.01)        *B33Y 50/02* (2015.01)
*G01N 29/04* (2006.01)        *G01N 29/44* (2006.01)

(52) Cooperative Patent Classification (CPC):
**B33Y 10/00; B33Y 30/00; B33Y 50/02;
G01N 29/04; G01N 29/14; G01N 29/44;** Y02P 10/25

(86) International application number:
**PCT/JP2022/039977**

(87) International publication number:
**WO 2023/112504 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021  JP 2021201343**

(71) Applicant: **Proterial, Ltd.
Tokyo 135-0061 (JP)**

(72) Inventors:
• **OTSU, Kenji**
  **Tokyo 100-8280 (JP)**
• **KOSEKI, Shuho**
  **Tokyo 135-0061 (JP)**
• **OKAMOTO, Shinya**
  **Tokyo 135-0061 (JP)**
• **YAMADA, Yuta**
  **Tokyo 135-0061 (JP)**

(74) Representative: **Wilson Gunn
Blackfriars House
The Parsonage
5th Floor
Manchester M3 2JA (GB)**

(54)    **STATE MONITORING SYSTEM AND STATE MONITORING METHOD**

(57)    A state monitor system and a state monitor method capable of detecting an AE wave with high accuracy are provided. Accordingly, from a sensing signal SS output detected at an acoustic emission sensor 23, an AE-wave extracting circuit 55 extracts an AE wave AEW taking a structure that is a manufacturing target of three-dimensional printing process as a generation source. An AE-wave analyzing circuit 56 analyzes the AE wave AEW extracted by the AE-wave extracting circuit 55. In this case, the AE-wave extracting circuit 55 includes a noise cutting circuit cutting a first disturbance noise generated in a frequency band of the AE wave AEW while using a band-stop filter.

*FIG. 5*

**EP 4 450 966 A1**

**Description**

TECHNICAL FIELD

The present invention relates to a state monitor system and a state monitor method, and relates to, for example, a technique of monitoring a state of three-dimensional printing process in an additive manufacturing method.

BACKGROUND ART

A Patent Document 1 describes the method determining presence/absence of defects by measuring acoustic energy generated by a melt pool in an additive manufacturing process during using a microphone to generate a measured acoustic profile and comparing this measured acoustic profile with an existing reference acoustic profile.

RELATED ART DOCUMENT

PATENT DOCUMENT

Patent Document 1: Japanese Patent Application Laid-Open Publication No. 2017-94728

SUMMARY OF THE INVENTION

PROBLEMS TO BE SOLVED BY THE INVENTION

In recent years, in order to manufacture a structure having a complicated shape, a manufacturing machine such as a 3-D printer has been used. An additive manufacturing method using such a manufacturing machine is called three-dimensional printing process. The structure that is manufactured by the three-dimensional printing process occasionally includes a defect. Meanwhile, it is known that the structure emits elastic energy contained therein as a unique acoustic wave because of the generation of the defect. Such a unique acoustic wave taking this structure as a generation source is called AE (Acoustic emission) wave. In the method of the Patent Document 1, the acoustic wave propagated through a space during the manufacturing of the structure is monitored by the microphone, and the presence/absence of the defect is determined based on whether the AE wave is included in this acoustic wave or not.
Here, the AE wave may be propagated through not only the space but also a solid body. The AE wave propagated through the solid body is sensed by an acoustic emission sensor. However, the acoustic wave sensed by the acoustic emission sensor may include not only the AE wave but also disturbance noise. When an intensity of the disturbance noise is large, the AE wave may be buried in the disturbance noise, and therefore, it may be difficult to detect the defect. Accordingly, a method of transmitting a frequency band of the AE wave but cutting other frequency bands by using a band-pass filter or others is generally used for cutting the disturbance noise in an acoustic diagnosis field. This manner can cut, for example, a low frequency such as the disturbance noise of several kHz or lower that may be caused by a mechanical element.
However, from the studies made by the present inventors and others, it has been found out that there is a risk of failure of the use of only the method of cutting the disturbance noise of the low frequency to accurately detect the AE wave, the method being a general method in the acoustic diagnosis field. The decrease of the detection accuracy of the AE wave also decreases the detection accuracy of the defect. Particularly when it is also desirable to determine the defect state for highly-accurate quality control of the structure in addition to the determination of the presence/absence of the defect as described in the Patent Document 1, it is important to accurately detect the AE wave.
The present invention has been made in consideration of such circumstances, and one of its objectives is to provide a state monitor system and a state monitor method achieving highly-accurate detection of the AE wave.

MEANS FOR SOLVING THE PROBLEMS

The outline of the typical embodiments of the inventions disclosed in the present application will be briefly described as follows.
A state monitor system according to a typical embodiment of the present invention monitors a state of three-dimensional printing process and includes: an acoustic emission sensor configured to output a sensing signal by sensing an acoustic wave; an AE-wave extracting circuit; and an AE-wave analyzing circuit. The AE-wave extracting circuit extracts the AE wave generated from a structure that is a manufacturing target for the three-dimensional printing process, from the sensing signal output detected at the acoustic emission sensor. The AE-wave analyzing circuit analyzes the AE wave extracted by the AE-wave extracting circuit. The AE-wave extracting circuit described here includes a noise cutting circuit configured to cut a first disturbance noise generated in the frequency band of the AE wave, by using band-stop filter.

EFFECTS OF THE INVENTION

According to the present application, the AE wave can be accurately detected.

Other objects, configurations and effects than those described above will be apparent from the following description of the embodiments of the invention.

BRIEF DESCRIPTIONS OF THE DRAWINGS

FIG. 1A is a schematic diagram showing an application example of a state monitor system according to a first embodiment;

FIG. 1B is a schematic diagram showing an application example of a state monitor system continued from FIG. 1A;

FIG. 2A is a schematic diagram showing an application example of the state monitor system according to the first embodiment as different from FIG. 1A;

FIG. 2B is a schematic diagram showing an application example of a state monitor system continued from FIG. 2A;

FIG. 3 is a cross-sectional diagram showing a configuration example of an acoustic emission sensor;

FIG. 4 is a diagram showing an example of a method of placing the acoustic emission sensor;

FIG. 5 is a schematic diagram showing a configurational example of an analyzer in FIGs. 1A, 1B, 2A and 2B;

FIG. 6 is a block diagram showing a configurational example of an AE-wave extracting circuit in FIG. 5;

FIG. 7A is a diagram showing an example of frequency spectrum of high-frequency disturbance noise generated in a frequency band of the AE wave;

FIG. 7B is a diagram showing an example of frequency spectrum of the AE wave;

FIG. 8 is a diagram showing a detailed configurational example of a noise cutting circuit in FIG. 6;

FIG. 9A is a diagram showing an example of a frequency property of each band stop filter (BSF) in FIG. 8;

FIG. 9B is a diagram showing an example of a frequency property of each band stop filter (BSF) in FIG. 8 as different from FIG. 9A;

FIG. 10 is a flowchart showing an example of a process content of a second extracting circuit in FIG. 6;

FIG. 11A is a diagram showing a signal wave before application of six BSFs shown in FIG. 8;

FIG. 11B is a diagram showing a signal wave after the application of six BSFs shown in FIG. 8;

FIG. 12A is a diagram showing effect of application of a noise cut algorithm based on time tracking shown in FIG. 10;

FIG. 12B is a diagram showing effect of application of a noise cut algorithm based on time tracking shown in FIG. 10;

FIG. 13 is a waveform chart showing an example of a sensing signal output from the acoustic emission sensor in FIG. 5;

FIG. 14 is a block diagram showing a configuration example of an AE-wave analyzing circuit in FIG. 5;

FIG. 15A is a diagram showing an example of a method of detecting an AE event in the AE-wave analyzing circuit in FIG. 14;

FIG. 15B is a diagram showing an example of a method of detecting an AE event in the AE-wave analyzing circuit in FIG. 14 as different from FIG. 15A;

FIG. 16A is a diagram for explaining an example of an examination result for the AE-wave analyzing circuit shown in FIG. 14;

FIG. 16B is a diagram for explaining an example of an examination result for the AE-wave analyzing circuit shown in FIG. 14;

FIG. 17 is a block diagram showing a configurational example of a circuit for quality determination in FIG. 5;

FIG. 18 is a diagram showing an example of an input screen displayed on a display apparatus in a user interface in FIG. 5;

FIG. 19 is a schematic diagram showing a configurational example of an analyzer in FIGs. 1A, 1B, 2A and 2B in a state monitor system according to a second embodiment;

FIG. 20 is a schematic diagram for explaining an operation principle of a defect-position standardizing circuit in FIG. 19;

FIG. 21 is a schematic diagram for explaining an operation principle of a defect-position standardizing circuit in FIG. 19;

FIG. 22 is a schematic diagram showing a configurational example of an analyzer in FIGs. 1A, 1B, 2A and 2B in a state monitor system according to a third embodiment;

FIG. 23 is a flowchart showing an example of a process content of a state monitor method during a manufacturing period, using the analyzer shown in FIG. 22; and
FIG. 24 is a flowchart showing an example of a process content of a state monitor method after the manufacturing period, using the analyzer shown in FIG. 22.

BEST MODE FOR CARRYING OUT THE INVENTION

Hereinafter, embodiments of the present invention will be described in detail, based on the accompanying drawings. Note that the same components are denoted by the same reference signs in principle throughout all the drawings for describing the embodiments, and the repetitive description thereof will be omitted.

A position of each element shown in the drawings, a size of the same, a shape of the same, a region of the same and others may not be illustrated as actual position, size, shape, region and others in order to easily understand the invention. Therefore, the present invention is not always limited to the position, size, shape, region and others illustrated in the drawings.

In embodiments, a processing performed by execution of a program may be explained. A computer described here makes a processor (such as CPU, GPU) execute the program, and performs the processing determined by the program while using a storage resource (such as memory), an interface apparatus (such as communication port) or others. Therefore, a processing entity executing the program may be a processor. Similarly, the processing entity executing the program may be a controller, a device, a system, a computer or a node including the processor. The processing entity executing the program may be an arithmetic unit, and may include a dedicated circuit for a specific processing. The dedicated circuit described here is, for example, a FPGA (Field Programmable Gate Array), an ASIC (Application Specific Integrated Circuit), a CPLD (Complex Programmable Logic Device) and others.

The program may be installed from a program source into the computer. The program source may be, for example, a storage medium that can be read by a program distribution server or the computer. If the program source is the program distribution server, the program distribution server may include a processor and a storage resource for storing a program to be distributed, and the processor of the program distribution server may distribute the program to be distributed to a different computer. In the embodiments, two or more programs may be achieved as one program, or one program may be achieved as two or more programs.

(First Embodiment)

<Configuration of State Monitor System>

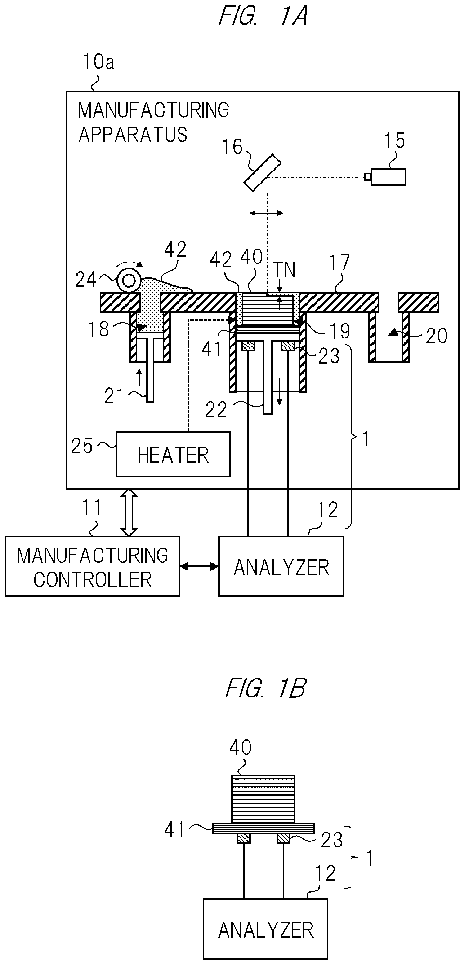

FIG. 1A is a schematic diagram showing an application example of a state monitor system according to a first embodiment. FIG. 1B is a schematic diagram showing an application example of a state monitor system continued from FIG. 1A. FIG. 1A shows a configurational example of a state monitor system 1 during manufacturing of the three-dimensional printing process. FIG. 1A shows a manufacturing apparatus 10a, a manufacturing controller 11 and an analyzer 12. The manufacturing apparatus 10a is, for example, a metal three-dimensional printing apparatus (3-D printer), using a powder bed fusion bonding method.

Specifically, in the manufacturing apparatus 10a, an energy source 15 emits energy beam (such as laser beam) to a Galvano scanner 16. The Galvano scanner 16 reflects the energy beam emitted from the energy source 15, toward a work stage 17 while changing a reflection angle. The work stage 17 includes an infill reservoir 18, a work space 19 and a collection reservoir 20. The infill reservoir 18 is filled with, for example, material powder 42 such as metal powder. A piston 21 exposes the material powder 42 in this infill reservoir 18 onto the work stage 17.

By a roller (or recoater) 24, the exposed material powder 42 is bedded and packed on the work stage 17. In this manner, the material powder 42 is bedded and packed inside the work space 19. In this case, the piston 22 controls a thickness of the material powder 42 that is bedded and packed inside the work space 19. The collection reservoir 20 collects the excess material powder 42 inside the work space 19 in accordance with the operation of the roller (recoater) 24. A manufacturing stage 41 is mounted on the piston 22. The structure 40 that is a manufacturing target for the three-dimensional printing process is manufactured to be layered on this manufacturing stage 41 by the powder bed fusion bonding method.

Specifically, in the powder bed fusion bonding method, the following unit steps are repeatedly executed. In each unit step, the material powder 42 is fused and bonded by causing the piston 22 and the roller (or recoater) 24 to bed and pack the material powder 42 into the work space 19 to generate a thickness "TN" equivalent to several tens of micrometers, and then, causing the Galvano scanner 16 to emit the energy beam to this the material powder 42. By such repetitive unit steps, the structure 40 is sequentially manufactured to be layered on the manufacturing stage 41 as a unit of the thickness TN. A shape of the structure 40 is defined by control for a direction of the Galvano scanner 16, based on the CAD data.

The manufacturing controller 11 controls each part of the manufacturing apparatus 10a so as to achieve such a manufacturing operation. Meanwhile, when the defect is generated in the structure 40 during the manufacturing period, the above-described AE wave is generated from the defect position of the structure 40. Accordingly, in order to capture this AE wave, single or plural (in this example, plural) acoustic emission sensors 23 are attached to a lower portion of the piston 22. The acoustic emission sensor 23 is, for example, an AE (Acoustic Emission) sensor including a piezoelectric element made of PZT (lead zirconate titanate) or others.

The AE wave output from the structure 40 propagates to the acoustic emission sensor 23 through the manufacturing stage 41 that is a metallic member and the piston 22 in this case. The acoustic emission sensor 23 senses the acoustic wave propagating through a solid body, and outputs a sensing signal. Note that the sensing signal output from the acoustic emission sensor 23 may include the disturbance noise in addition to the AE wave taking the structure 40 as the generation source. The analyzer 12 determines the state of the defect of the structure 40 generated during the manufacturing period by extracting the AE wave by cutting the disturbance noise and analyzing the extracted AE wave. Such acoustic emission sensor 23 and analyzer 12 configure the state monitor system 1.

In this case, although depending on a kind of a material, a shape and so on of the structure 40, the frequency band of the AE wave in the case of the metallic material may be of a value ranging from several tens of kHz to several hundreds of kHz. The disturbance noise may include a low-frequency disturbance noise (second disturbance noise) caused by a mechanical element and a high-frequency disturbance noise (first disturbance noise) caused by a non-mechanical element such as electric signal/magnetic signal. The low-frequency disturbance noise is equivalent to various components such as a vibration component caused by a predetermined-cycle mechanical operation of the apparatus itself, a vibration component propagating from ground to the apparatus, sound noise and others. A frequency of the low-frequency disturbance noise is often, for example, equal to or lower than several kHz to be lower than the frequency band of the AE wave.

On the other hand, the high-frequency disturbance noise has a higher frequency than that of the low-frequency disturbance noise, and the frequency may be included in the frequency band of the AE wave. For example, a heater 25 shown in FIG. 1A may emit the high-frequency disturbance noise. The heater 25 is a high-frequency heater for previously heating a manufacturing position of the structure 40 before the beam irradiation. However, a generation source of the high-frequency disturbance noise is not always limited to the heater 25, and may be, for example, any element attached to the manufacturing apparatus 10a. For example, as the generation source of the high-frequency disturbance noise, an inverter generating electromagnetic noise, a switching power supply generating switching noise and others are exemplified.

The high-frequency heater generates the magnetic flux by making flow of a high-frequency electric current to a heating coil (not illustrated) placed near the manufacturing position, and causes this magnetic flux to cross a conductor to heat the conductor. The high-frequency disturbance noise may be caused by such heating using the high-frequency electric current. Further, the high-frequency heater may change a frequency of the high-frequency electric current in accordance with temperature control. In this case, a frequency band of the high-frequency disturbance noise may be not fixed but changed over time. In order to accurately extract the AE wave, it is particularly necessary to cut such a high-frequency disturbance noise.

FIG. 1B shows a state after completion of the manufacturing of the structure 40 based on FIG. 1A. At time of the completion of the manufacturing of the structure 40, that is, at time of end of the manufacturing period, temperatures of the structure 40 and the manufacturing stage 41 are high because of the emission of the energy beam during the manufacturing period. Therefore, it is desirable to cool the structure 40 and the manufacturing stage 41 down to some temperature. In the specification, a period from the time of end of the manufacturing period to time of end of the cooling is referred to as cooling period. At time of end of this cooling period, the structure 40 and the manufacturing stage 41 are unchucked from the manufacturing apparatus 10a.

In this case, the defect may be generated in the structure 40 in the cooling period. Further, the defect may be generated even in some period after the end of the cooling period. In the specification, the some period after the end of the cooling period is referred to as post-cooling period. The cooling period and the post-cooling period are collectively referred to as post-manufacturing period. The post-manufacturing period is, for example, one hour to several days or longer. In the post-manufacturing period, the defect caused by, for example, change of material microstructure may be generated. Also, occasionally, hydrogen or others mixed in the material during the manufacturing diffuses to a grain boundary, and the crack is caused by occurrence of hydrogen embrittlement. In consideration of such a defect, it is desirable to sense the acoustic wave by using the acoustic emission sensor 23 even in the cooling period and the post-cooling period.

In the cooling period, the acoustic wave may be sensed by, for example, the acoustic emission sensor 23 shown in FIG. 1A. However, if the acoustic wave is also sensed in the post-cooling period by the acoustic emission sensor 23 shown in FIG. 1A, throughput of the apparatus may decrease. In other words, in the post-cooling period that may be of several days or longer, an alternative structure 40 cannot be manufactured by the manufacturing apparatus 10a of FIG. 1A. Accordingly, as shown in FIG. 1B, in the post-cooling period, the acoustic emission sensor 23 is desirably put on the manufacturing stage 41 or others to sense the acoustic wave while the structure 40 and the manufacturing stage 41 are unchucked from the manufacturing apparatus 10a. Note that the structure 40 is separated from the manufacturing stage 41 after elapse of this post-manufacturing period.

Note that it is desirable to put the acoustic emission sensor 23 to a position close to the structure 40 in a viewpoint of sensitivity. In this viewpoint, in FIG. 1A, this may be put on the manufacturing stage 41 as well as the case of FIG. 1B. However, in a viewpoint of protection from temperature, the acoustic emission sensor 23 may be put on the piston 22 as shown in FIG. 1A. The putting position of the acoustic emission sensor 23 is different between FIGs. 1A and 1B, and therefore, conditions (such as a reference amplitude value or others) of the AE wave input to the analyzer 12 may be different therebetween. Accordingly, in FIG. 1B, in order to match the input conditions of the AE wave, a member equivalent to the piston 22 of FIG. 1A may be inserted between the manufacturing stage 41 and the acoustic emission sensor 23.

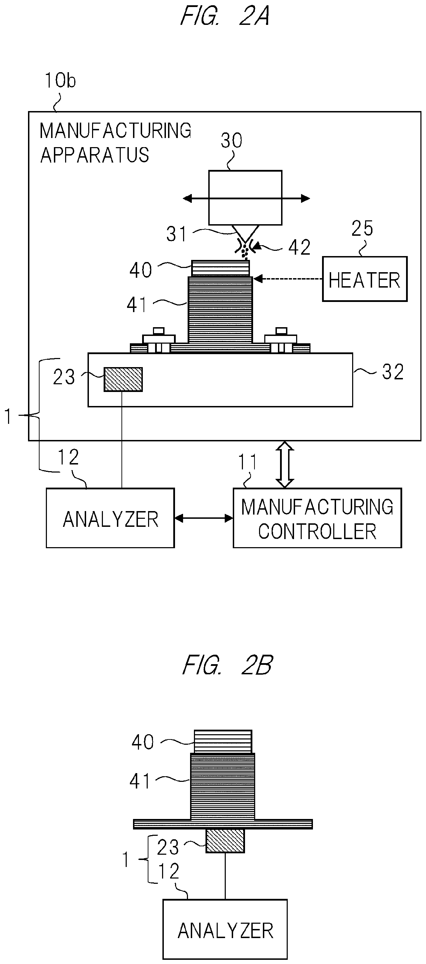

FIG. 2A is a schematic diagram showing an application example of the state monitor system according to the first embodiment as different from FIG. 1A. FIG. 2B is a schematic diagram showing an application example of the state monitor system continued from the state of FIG. 2A. FIG. 2A shows a configurational example of the state monitor system 1 in the manufacturing of the three-dimensional printing process. FIG. 2A shows a manufacturing apparatus 10b, a manufacturing controller 11 and an analyzer 12. The manufacturing apparatus 10b is, for example, a metal three-dimensional printing process apparatus (3-D printer) using a directed energy deposition method as different from FIG. 1A.

Specifically, in the manufacturing apparatus 10b, the manufacturing stage 41 is put on the work stage 32. Meanwhile, a manufacturing head 30 includes an energy nozzle 31, and emits the energy beam (such as laser beam) from the energy nozzle 31 toward the manufacturing stage 41 while changing its direction simultaneously with the injection of the material powder 42 such as the metal powder. In this case, the direction of the manufacturing head 30 is controlled based on the CAD data. In this manner, the material powder 42 is deposited while being fused and bonded on the manufacturing stage 41 to manufacture the structure 40 having a predetermined shape. As described above, the directed energy deposition method is a method of depositing the fused metal by emitting the energy beam simultaneously with the injection of the material powder 42.

The manufacturing controller 11 controls each part of the manufacturing apparatus 10b so as to achieve such a manufacturing operation. In this example, single or plural (in this example, single) acoustic emission sensor 23 is put on the work stage 32. Based on the AE wave included in the output sensing signal of this acoustic emission sensor 23, the analyzer 12 analyzes the defect of the structure 40 generated during the manufacturing period. Such acoustic emission sensor 23 and analyzer 12 configure the state monitor system 1. Also in FIG. 2, the heater 25 for previously heating the manufacturing position of the structure 40 is provided as well as the case of FIG. 1A.

FIG. 2B shows a state after completion of the manufacturing of the structure 40 based on FIG. 2A. As well as the cases of FIGs. 1A and 1B, the structure 40 and the manufacturing stage 41 are unchucked from the manufacturing apparatus 10b during the post-manufacturing period, more specifically the post-cooling period. Then, the acoustic wave is sensed by the acoustic emission sensor 23 put on the manufacturing stage 41 or others. After the elapse of the post-manufacturing period, the structure 40 is separated from the manufacturing stage 41.

Note that the putting position of the acoustic emission sensor 23 is suitably changeable as well as the cases of FIGs. 1A and 1B. Also, in FIGs. 1A and 2A, the energy beam is not limited to the laser beam, and may be, for example, electron beam or others.

<Details of Acoustic Emission Sensor>

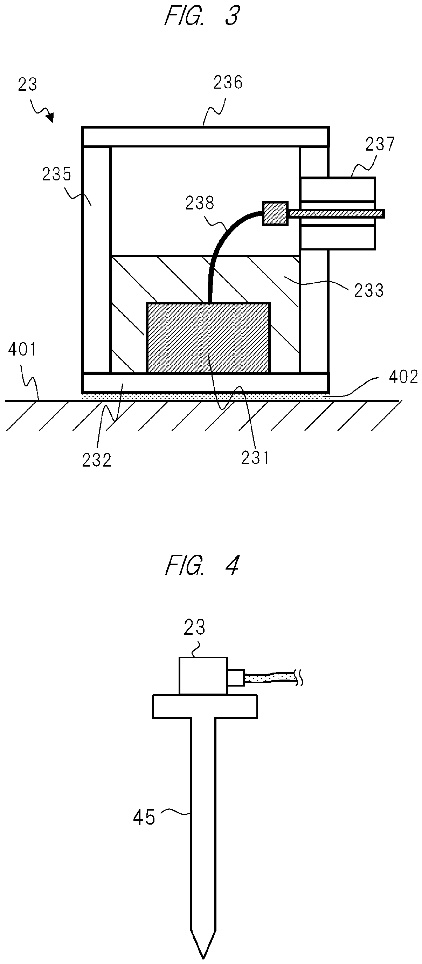

FIG. 3 is a cross-sectional diagram showing a configuration example of an acoustic emission sensor. In FIG. 3, an AE sensor mounted on an installation surface 401 is shown as an example of the acoustic emission sensor 23. The well-known AE sensors include various types, all of which are applicable. However, the embodiment employs a wideband and single-ended AE sensor. The wideband AE sensor includes a band that is flat as a frequency property, and has a wide bandwidth of, for example, 100 kHz to 1 MHz.

The AE sensor shown in FIG. 3 includes a piezoelectric element 231, a receiver plate 232, a damper 233, a shield case 235, a lid 236, a connector 237, a signal cable 238, and others. In the AE sensor, the damper 233 is arranged on the upper side of the piezoelectric element 231 to suppress resonance. The sensitivity of the AE sensor is, for example, 40 to 55 dB. The standard for sensitivity is set to "0 dB = 1 V/m/s".

The heat-resistant temperature of the AE sensor is normally, for example, 80°C, or, for example, 200°C for high temperature applications. The receiver plate 232, particularly a wave receiving surface thereof, is fixed to the installation surface 401 through an acoustic coupler such as grease 402. For the fixing, note that various fixing means such as adhesion and screwing may be applied. The signal cable 238 extending from the piezoelectric element 231 is connected to the connector 237, and is connected to an external signal cable through the connector 237.

FIG. 4 is a diagram showing an example of a method of placing the acoustic emission sensor. In FIG. 4, the acoustic emission sensor 23 is put on one end of a flat section of a wave guide rod (wave guide) 45. And, the other end of the wave guide rod 45 is in contact with a measurement point. For example, in FIG. 2A, if the temperature of the working stage 32 exceeds the heat-resistant temperature of the acoustic emission sensor 23, it is difficult to directly put the acoustic emission sensor 23 on the working stage 32. In such a case, for example, the other end of the wave guide rod 45 can be brought into contact with the working stage 32 by using the configuration shown in FIG. 4.

The decrease in temperature through the wave guide rod 45 like this can achieve the heat-resistant temperature of the acoustic emission sensor 23 to be satisfied. Specifically, a length of the wave guide rod 45 is defined so that the heat-resistant temperature of the acoustic emission sensor 23 can be satisfied. The configuration shown in FIG. 4 is used when the temperature of the measurement point exceeds the heat-resistant temperature of the acoustic emission sensor 23, when there is not enough space to directly put the acoustic emission sensor 23, or when the measurement point has a shape such as a curved surface shape that is not suitable for putting the acoustic emission sensor 23.

<Outline of Analyzer>

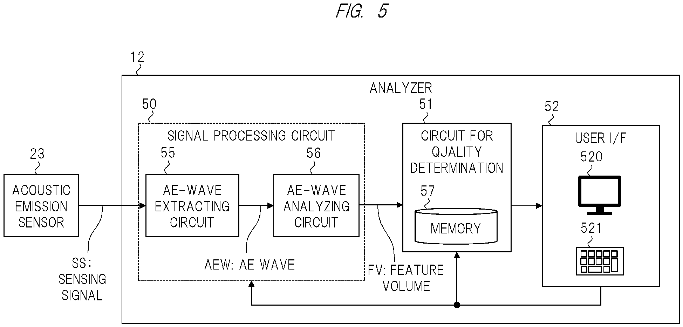

FIG. 5 is a schematic diagram showing a configurational example of an analyzer in FIGs. 1A, 1B, 2A and 2B. The analyzer 12 shown in FIG. 5 includes a signal processing circuit 50, a circuit for quality determination 51, and a user interface (I/F) 52. The user interface 52 includes a display apparatus 520 and an input apparatus 521. The signal processing circuit 50 includes an AE-wave extracting circuit 55 and an AE-wave analyzing circuit 56, and processes a sensing signal SS output from the acoustic emission sensor 23.

The AE-wave extracting circuit 55 extracts an AE wave AEW taking the structure 40 as the generation source, from the sensing signal SS output detected at the acoustic emission sensor 23. That is, the AE-wave extracting circuit 55 extracts an AE wave AEW from the sensing signal SS containing the above-described low-frequency disturbance noise, high-frequency disturbance noise, and AE wave AEW. The AE-wave analyzing circuit 56 analyzes the AE wave AEW extracted by the AE-wave extracting circuit 55, and calculates, for example, a feature volume FV of the AE wave AEW.

The circuit for quality determination 51 determines the quality of the structure 40, based on the analysis results such as the feature volume FV obtained by the AE-wave analyzing circuit 56. For example, the circuit for quality determination 51 determines the defect state that is not only the presence or absence of defect in the structure 40 but also a defect level or type. The circuit for quality determination 51 notifies a user of such determination results through the display apparatus 520. Also, the user can make various settings for the signal processing circuit 50 and the circuit for quality determination 51 through the input apparatus 521.

<Details of AE-Wave Extracting Circuit>

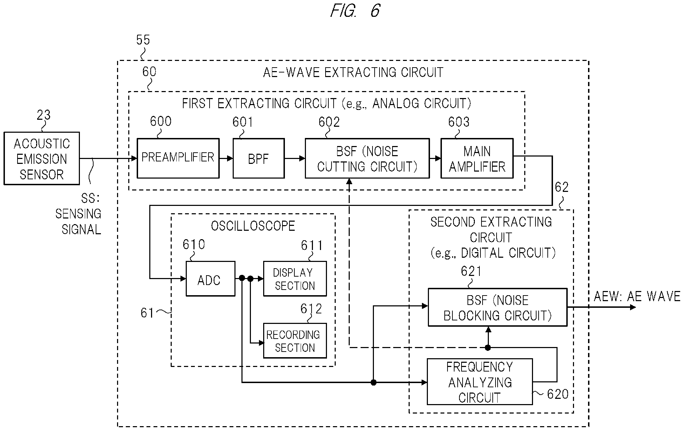

FIG. 6 is a block diagram showing a configurational example of the AE-wave extracting circuit in FIG. 5. The sensing signal SS output detected at the acoustic emission sensor 23 is input to a first extracting circuit 60. The first extracting circuit 60 is made of, for example, an analog circuit. The first extracting circuit 60 includes a preamplifier 600, a band-pass filter (abbreviated as BPF) 601, a band-stop filter (abbreviated as BSF) 602, and a main amplifier 603.

The preamplifier 600 amplifies the sensing signal SS output detected at the acoustic emission sensor 23. The acoustic emission sensor 23 and the preamplifier 600 are connected through a signal cable. Since the disturbance noise tends to be mixed into the signal cable, a shorter cable length is desirable. Also, the preamplifier 600 may be included in the acoustic emission sensor 23, as in a case of a preamplifier-integrated acoustic emission sensor.

The BPF 601 cuts the low-frequency disturbance noise (second disturbance noise) having a frequency lower than the above-described frequency band of the AE wave, and passes the frequency band of the AE wave. Note that the BPF 601 has a high-pass filter property and a low-pass filter property. On the other hand, the frequency property of the acoustic emission sensor 23 is usually the low-pass filter property. For this reason, a high-pass filter can be arranged instead of the BPF 601.

The BSF 602 cuts the high-frequency disturbance noise (first disturbance noise) generated in the above-described frequency band of the AE wave. The main amplifier 603 further amplifies the signal output from the BSF 602. Note that the configuration example shown in FIG. 6 employs a two-stage amplification configuration consisted of the preamplifier 600 and the main amplifier 603. However, a single-stage amplification configuration may also be employed. Also, for example, in a case of layer manufacturing where the signal level of the sound source is high, only the preamplifier 600 may be used, and a gain of the main amplifier 603 may be set to 0 dB. Alternatively, only the preamplifier 600 may be used, and the main amplifier 603 may not be connected. Also, the respective installation locations of the BPF 601 and BSF 602 may be changed as appropriate to be a stage before the preamplifier 600, a stage after the main amplifier 603 or others.

For example, an oscilloscope 61 is connected to a stage after the first extracting circuit 60. The oscilloscope 61 is a waveform measuring instrument, and includes an ADC (analog-to-digital converter) 610, a displaying section 611, and a recording section 612. The ADC 610 converts analog signals output from the first extracting circuit 60 into digital signals by sampling those analog signals at a specified sampling frequency. The sampling frequency is, for example, 2 MHz. The displaying section 611 is a waveform displaying apparatus, and displays the waveform of the digitally-converted signal on a screen. The recording section 612 records the digitally-converted signals; that is, the data representing the sensing signal SS output detected at the acoustic emission sensor 23 over time, as a log, and outputs it to the outside when requested.

A second extracting circuit 62 is connected after the ADC 610 in the oscilloscope 61. The second extracting circuit 62 is consisted of, for example, a digital circuit including a processor such as a DSP (digital signal processor). The second extracting circuit 62 includes a frequency analyzing circuit 620 and a BSF 621.

Although described in detail later, the frequency analyzing circuit 620 transforms a time domain into a frequency domain to calculate frequency spectrum by using a short-time Fourier transform for the sensing signal SS output from the acoustic emission sensor 23, more particularly, the digital signal output through the first extracting circuit 60 and the ADC 610 in the oscilloscope 61. Then, the frequency analyzing circuit 620 detects the frequency band of the high-frequency disturbance noise (first disturbance noise) based on the calculated frequency spectrum.

The BSF 621 is consisted of, for example, a digital filter such as a FIR (Finite Impulse Response) filter or an IIR (Infinite Impulse Response) filter. The BSF 621 cuts the high-frequency disturbance noise, based on the frequency band of the high-frequency disturbance noise detected by the frequency analyzing circuit 620. Note that a plurality of the frequency bands of the high-frequency disturbance noise may be detected, and furthermore, the detected frequency band value that is the peak frequency may also change over time as described above. The use of the digital filter makes it possible to easily handle such a high-frequency disturbance noise.

Meanwhile, the same functionality as the BSF 621 in the second extracting circuit 62 can be achieved by providing a plurality of the BSFs 602 in the first extracting circuit 60 and furthermore, by making each BSF 602 from a frequency variable filter of analog circuit type. In this case, the frequency analyzing circuit 620 is enough to inform the BSF 602 in the first extracting circuit 60 of the frequency band of the detected high-frequency disturbance noise. Thus, the BSF 602 and BSF 621 function as noise cutting circuits that use the BSF to cut the high-frequency disturbance noise (first disturbance noise) generated in the frequency band of the AE wave. The noise cutting circuit is achieved by either one of the BSF 602 and BSF 621 or a combination of both. Note that the AE-wave extracting circuit 55 may be achieved as an integrated oscilloscope device.

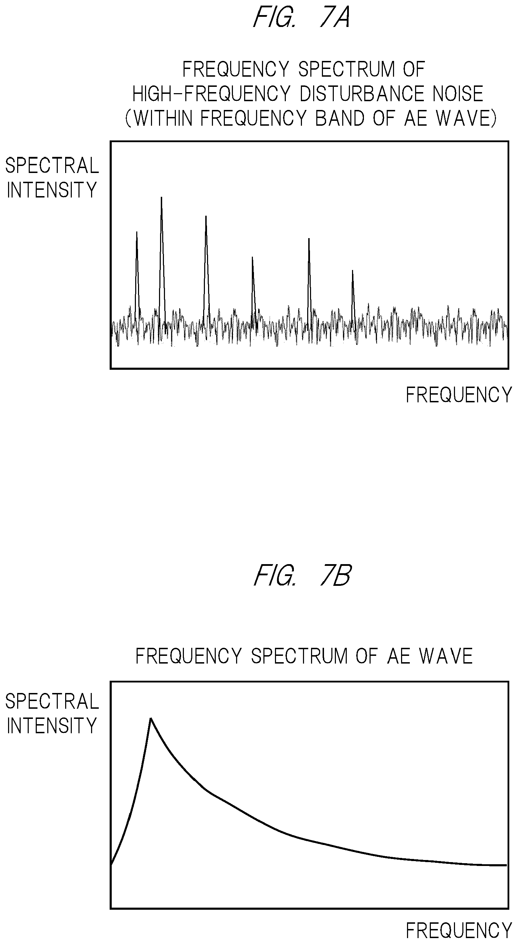

FIG. 7A is a diagram showing an example of frequency spectrum of the high-frequency disturbance noise generated in the frequency band of the AE wave. As shown in FIG. 7A, the high-frequency disturbance noise contains a plurality of frequency bands whose peak frequencies are different from one another. The plurality of frequency bands may include a fundamental frequency component, its high harmonic component and low harmonic component. A bandwidth of each frequency band is a narrowband of, for example, several kHz.

FIG. 7B is a diagram showing an example of frequency spectrum of the AE wave. The frequency band of the AE wave is broader than each frequency band in the high-frequency disturbance noise shown in FIG. 7A. The frequency band of the AE wave ranges, for example, from 20 kHz to 500 kHz. In this case, the bandwidth is 480 kHz. As shown in FIG. 7A and FIG. 7B, each frequency band of the high-frequency disturbance noise overlaps with the frequency band of the AE wave.

In a general method, the disturbance noise is cut only by the BPF 601 in the first extracting circuit 60 shown in FIG. 6. The use of the BPF 601 or the high-pass filter can cut outside the frequency band of the AE wave, in particular, the low-frequency disturbance noise having a lower frequency than the frequency band of the above-described AE wave. However, if the high-frequency disturbance noise as shown in FIG. 7A is generated, the general method is difficult to cut the high-frequency disturbance noise. Therefore, when the noise cutting circuit as illustrated in FIG. 6, that is, the BSF 602 or 621 is arranged, the frequency band of the high-frequency disturbance noise can be cut on target by the BSF.

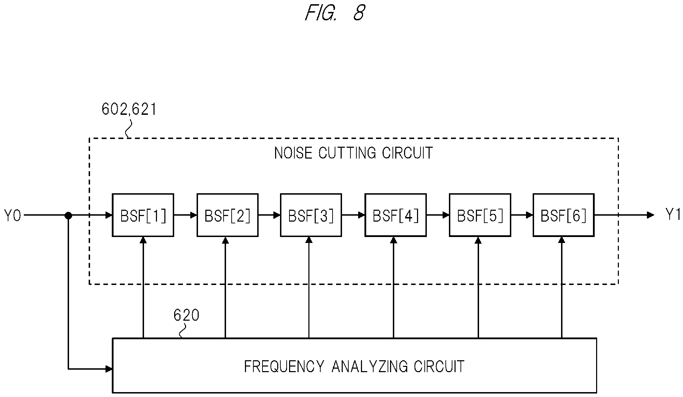

FIG. 8 is a diagram showing a detailed configurational example of the noise cutting circuit in FIG. 6, namely the BSFs 602 and 621. In the example shown in FIG. 8, six BSFs that are BSF [1] to BSF [6] are provided in series connection to correspond to the high-frequency disturbance noise having six frequency bands shown in FIG. 7A. An input signal Y0 is input to BSF [1], and an output signal Y1 is output from BSF [6]. In this manner, the number of BSFs is provided as many as the number of frequency bands of the high-frequency disturbance noise. This case may employ a method of causing the frequency analyzing circuit 620 to automatically determine the number of frequency bands of the high-frequency disturbance noise and automatically setting the number of BSFs to correspond to this number.

However, this case is not always limited to employ such a method. For example, this case may employ a method of previously selecting an upper limit number of BSFs on the setting screen and cutting the number of frequency bands equal to or less than the upper limit number. That is, even if not all frequency bands but some frequency bands are cut, a substantial cutting effect may be obtained sufficiently. For example, when it is assumed that the upper limit number of BSFs is "n" ("n" is an integer that is equal to or larger than 2), the frequency analyzing circuit 620 detects the frequency bands of the high-frequency disturbance noise while taking the "n" spectral intensities in a descending order of the spectral intensity to be the upper limit. Then, the noise cutting circuit cuts the "n" frequency bands in the high-frequency disturbance noise by using the previously-arranged n BSFs.

For example, when the BSF 621 which is the digital filter is used, the number of BSFs can be easily increased in terms of mounting. However, increasing the number of BSFs may increase the arithmetic load of the digital filter. In addition, when the BSF 602 which is the analog circuit is used, an upper limit generally may occur in the number of BSFs in terms of mounting. Therefore, it is beneficial to allow the upper limit of the number of BSFs to be set, and it is beneficial to do so particularly when the BSF 602 is used.

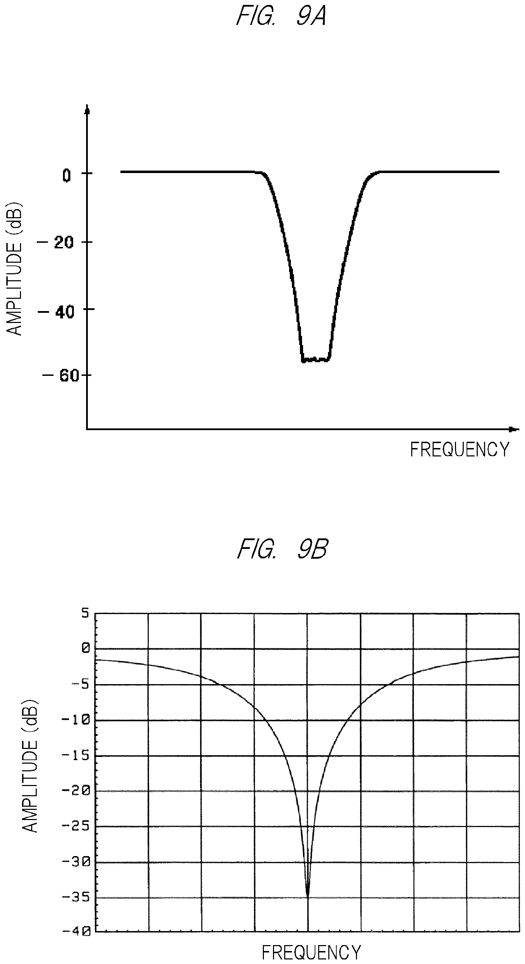

FIG. 9A is a diagram showing an example of a frequency property of each band stop filter (BSF) in FIG. 8. As shown in FIG. 9A, the BSF has a property of attenuating the signal of the cut-off frequency band. FIG. 9B is a diagram showing an example of a frequency property of each band stop filter (BSF) in FIG. 8 as different from FIG. 9A. As shown in FIG. 9B, the BSF may have a narrower band property than that of the case of FIG. 9A. Such a BSF is also called a notch filter. If the frequency band of the high-frequency disturbance noise is the sufficiently-narrow frequency band, the notch filter may be utilized.

<Operation of Second Extracting Circuit>

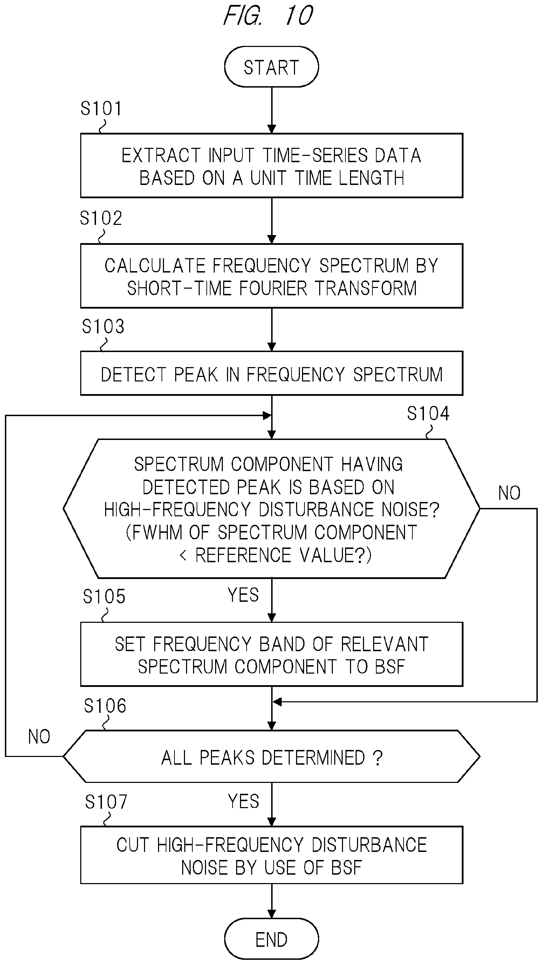

FIG. 10 is a flowchart showing an example of a process content of the second extracting circuit 62 in FIG. 6. If the frequency band of the high-frequency disturbance noise is fixed and previously known, when the fixed cut-off frequency band is previously set for the plurality of BSFs that are BSF [1] to BSF [6] as shown in FIG. 8, the high-frequency disturbance noise can be cut. However, if the peak frequency of each frequency band changes over time, there is a risk of failure of the BSF [1] to BSF [6], for which the fixed cut-off frequency band has been set, to sufficiently cut the high-frequency disturbance noise.

In this case, as shown in FIG. 7A, the high-frequency disturbance noise out of the cut-off frequency band can have the sufficiently high spectral intensity and the same amplitude as that of the AE wave. As a result, the AE-wave analyzing circuit 56 shown in FIG. 5 causes a risk of, for example, erroneously detecting the high-frequency disturbance noise as the AE wave and targeting and analyzing the high-frequency disturbance noise. Accordingly, a noise cutting algorithm based on time tracking as shown in FIG. 10 is applied to cut the high-frequency disturbance noise whose peak frequency of the frequency band changes over time.

In FIG. 10, the frequency analyzing circuit 620 extracts the sensing signal SS output detected at the acoustic emission sensor 23, more specifically extracts the data that is input over time, in the unit of time (step S101), through the first extracting circuit 60 and the ADC 610 in the oscilloscope 61. The unit of time is determined in consideration of the duration of the AE wave described later, and is, for example, 1 ms. Subsequently, the frequency analyzing circuit 620 calculates the frequency spectrum by performing the short-time Fourier transform (STFT) to the signal extracted per the unit of time, more specifically to the data over time (step S102). The calculated frequency spectrum is consisted of, for example, a superposition of the frequency spectrum shown in FIG. 7A and the frequency spectrum shown in FIG. 7B.

Next, the frequency analyzing circuit 620 detects peaks of the frequency spectrum (step S103). In this case, the frequency analyzing circuit 620, for example, determines the background noise level by previously calculating the frequency spectrum while the manufacturing apparatus shown in FIG. 1A and others is powered on and in a standby state. Specifically, the frequency analyzing circuit 620 previously determines, for example, a level obtained by adding about 20 dB to the average intensity of the frequency spectrum, as the background noise level. Then, in step S103, the frequency analyzing circuit 620 compares the spectral intensity of each frequency with the background noise level, and detects the peaks of the target spectrum that has exceeded the background noise level.

Next, the frequency analyzing circuit 620 determines whether the spectral component that has the peaks detected in step S103 is based on the high-frequency disturbance noise, in other words, whether it is from either the high-frequency disturbance noise or the AE wave (step S104). In this case, the frequency analyzing circuit 620 determines it by, for example, using a Full Width Half Maximum (FWHM).

Specifically, as shown in FIG. 7A and FIG. 7B, the bandwidth, such as about several kHz, of each frequency band of the high-frequency disturbance noise is significantly narrower than the bandwidth, such as about 480 kHz, of the frequency band of the AE wave. By using this property, the frequency analyzing circuit 620 calculates the FWHM of the spectral component having the peaks detected in step S103, and compares the calculated FWHM with a predetermined reference value such as 50 kHz. Then, the frequency analyzing circuit 620 detects the frequency band of the high-frequency disturbance noise by determining the frequency band of the spectral component whose FWHM is narrower than the reference value as the frequency band of the high-frequency disturbance noise.

If it is determined in step S104 that the spectral component is based on the high-frequency disturbance noise ("YES"), the frequency analyzing circuit 620 sets this frequency band of the spectral component to the cut-off frequency band of the BSF 621 (step S105). Next, in step S106, the frequency analyzing circuit 620 determines whether the peaks detected in step S103 include an undetermined peak or not. If the peaks include the undetermined peak ("No"), the processing returns to step S104 to repeat the same processing.

Also, if it is determined in step S104 that the spectral component is not based on the high-frequency disturbance noise ("No"), the processing proceeds to the processing in step S106 without through the processing in step S105. If it is determined in step S106 that the peaks do not include the undetermined peak ("YES"), the frequency analyzing circuit 620 cuts the high-frequency disturbance noise by using the BSF 621 for which the frequency band of the high-frequency disturbance noise has been set to (step S107). As a specific example, for example, in the example shown in FIG. 7A and FIG. 7B, seven peaks are detected in step S103, and the processing of steps S104 to S106 is executed seven times. Then, it is determined that six of the seven peaks are based on the high-frequency disturbance noise while the remaining one is based on the AE wave.

When the peaks are detected in step S103, a peak that should originally be detected as one peak may be detected as a plurality of thin peaks, depending on the frequency resolution in the frequency analyzing circuit 620. That is, for example, a slope portion of each of the six peaks shown in FIG. 7A may be of not a linear shape but a serrate shape. In such a case, the frequency analyzing circuit 620 may detect the peaks after, for example, performing smoothing processing to the frequency spectrum calculated in step S102. Alternatively, the frequency analyzing circuit 620 may reorder the detected peaks in order of intensity, and then, in order beginning with the peak with the highest intensity, perform a process for excluding a peak included in the frequency range around this peak (for example, $\pm 5$ kHz).

For example, it is assumed that the slope portion of the second peak (described as "P2") from the left in FIG. 7A includes one peak (described as "P2x") having a higher peak value than that of the third peak (described as "P3") from the left. In this case, the order of the peak intensity is P2, P2x, P3, and others. First, the peak (P2) is targeted so that the peaks included in the frequency range around the peak are excluded, and therefore, the peak (P2x) is excluded. Next, the same processing is performed to the peak (P3) to be targeted. Such processing is performed to all peaks or a predetermined number of peaks detected in step S103 and targeted.

After that, the frequency analyzing circuit 620 repeatedly executes the processing flow shown in FIG. 10. That is, by calculating the frequency spectrum of the extracted signal every time of the extraction in the unit of time in step S101, the frequency analyzing circuit 620 detects the frequency band of the high-frequency disturbance noise (steps S102 to S104). Then, the frequency analyzing circuit 620 variably controls the property of the BSF 621, based on the detected frequency band of the high-frequency disturbance noise (step S105). In this manner, the high-frequency disturbance noise whose peak frequency in the frequency band changes over time can be cut in time tracking.

When the processing flow in FIG. 10 is repeatedly executed, that is, when the sensing signal SS output from the acoustic emission sensor 23 is sequentially extracted in the unit of time that is the window width, the frequency analyzing circuit 620 performs the extraction so that the time partially overlaps. Specifically, the frequency analyzing circuit 620 performs the extraction so that, for example, 500 of a window width to be extracted next overlaps with a previous window width. This ensures continuity in performing the short-time Fourier transform (STFT) in step S102.

Also, the processing flow of FIG. 10 does not necessarily have to be performed in real time in conjunction with the operation of the manufacturing apparatus shown in FIG. 1A and others, and may be performed after the operation. That is, the frequency analyzing circuit 620 may execute the processing flow of FIG. 10 while reading the data stored over time in the recording section 612 of the oscilloscope 61 shown in FIG. 6 after the operation.

<Cutting-Off Effect of High-Frequency Disturbance Noise>

The experimental results of single-wall printing process using the manufacturing apparatus 10b of the directed energy deposition system (DED system) shown in FIG. 2A will be described. A bead length is 50 mm, the number of building layers is 45, and a building pitch (that is a bead height of each layer) is 0.50 mm. A manufacturing path is set to switch a starting point of each layer so that the first layer is printed toward the +Y direction while the second layer is printed toward the -Y direction, and, as a result, a total of 45 layers of beads are built. An operation speed is 600 mm/min, a laser power is 1400 W, and a preheating temperature in the heater 25, more specifically the high-frequency heater, is 400°C.

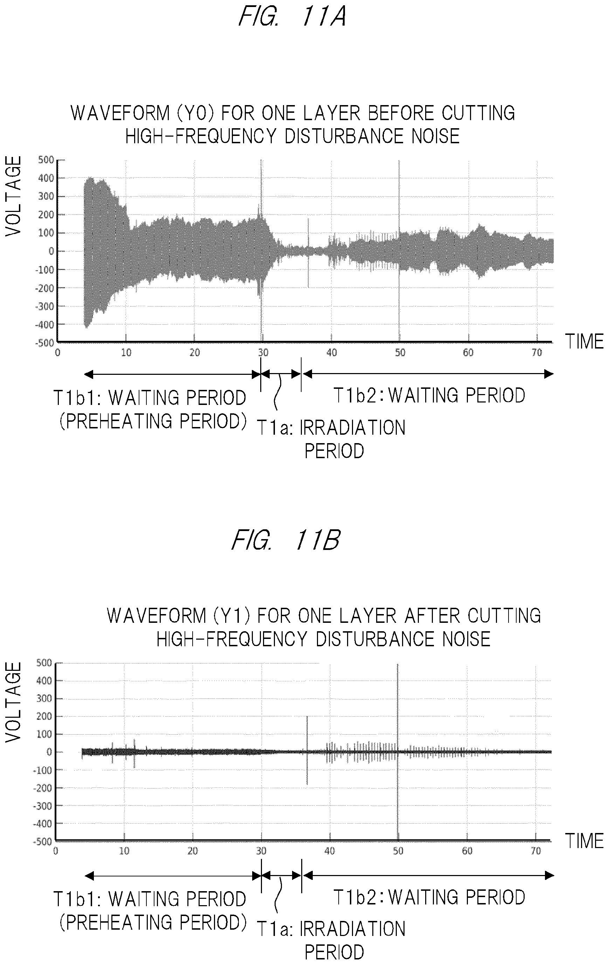

FIG. 11A and FIG. 11B are diagrams each showing a signal wave before and after the application of the six BSFs shown in FIG. 8. Each of FIG. 11A and FIG. 11B shows the sensing signal SS output detected at the acoustic emission sensor 23, and the sensing signal SS outputs were observed during a standby period (preheating period) T1b1 before the laser irradiation on the seventh layer, a laser irradiation period T1a, and a standby period T1b2 after the laser irradiation. FIG. 11A shows a waveform of an input signal Y0 shown in FIG. 8, that is a waveform before the noise cutting. FIG. 11B is a waveform of an output signal Y1 shown in FIG. 8, that is a waveform after the noise cutting.

As shown in FIG. 11A, before the noise cutting, the large amplitude is observed overall because of the high-frequency disturbance noise. On the other hand, as shown in FIG. 11B, after the noise cutting, the amplitude is significantly attenuated, and a spike-shaped AE wave is clearly recognizable. When a magnitude of the background noise is lowered to the level shown in FIG. 11B, the AE waves can be detected with high accuracy by threshold comparison performed by an AE-wave analyzing circuit 56 described later.

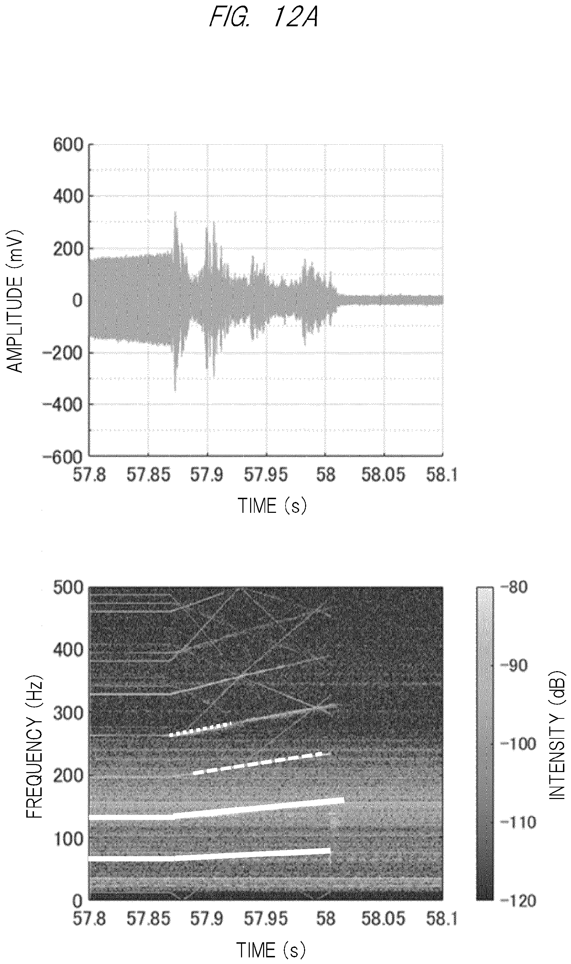

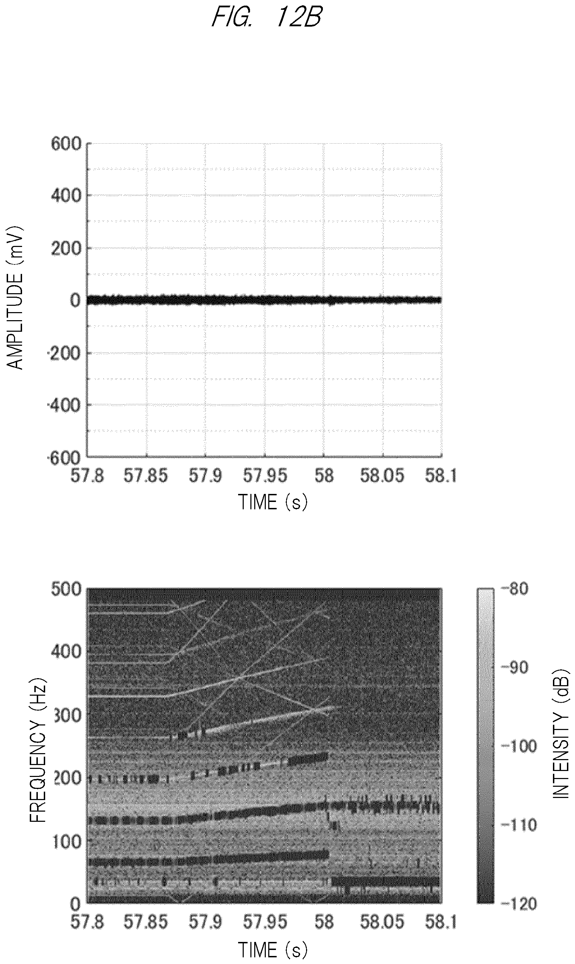

Each of FIG. 12A and FIG. 2B is a diagram showing effect of the application of the noise cut algorithm based on time tracking shown in FIG. 10. FIG. 12A is a signal waveform of the high-frequency disturbance noise before the noise cutting, and FIG. 12B shows a signal waveform after the noise cutting made by the noise cutting algorithm shown in FIG. 10. An upper column of each of FIG. 12A and FIG. 12B shows the amplitude waveform, and a lower column thereof shows a spectrogram of its time-frequency analysis. As shown in the spectrogram in FIG. 12A, the signal waveform before the noise cutting includes a plurality of frequency components with high intensity of the high-frequency disturbance noise, and the frequency of each frequency component changes over time.

On the other hand, FIG. 12B shows the results of the variable control of the cut-off frequency band with three BSFs in every unit of time. Here, three spectral components in a descending order of the spectral intensity are detected as the high-frequency disturbance noise in every 1 ms which is the unit of time, and ±5 kHz of the peak frequency of each spectral component is set as the cut-off frequency band of the three BSFs. As shown in the spectrogram in FIG. 12B, the spectral components of the high-frequency disturbance noise are eliminated, and the frequency components of the high-frequency disturbance noise can be cut in time tracking.

Also, because of the high-frequency disturbance noise, the large amplitude is observed overall in the upper column of FIG. 12A. However, as shown in the upper column of FIG. 12B, because of cutting off the high-frequency disturbance noise, the amplitude has no prominent value and has a sufficiently small value to be almost constant. Since the high-frequency disturbance noise is cut as described above, the high-frequency disturbance noise is not erroneously detected as the AE wave, and only the AE wave can be extracted with high accuracy.

In full automation of the discrimination of the defect-derived AE wave from the disturbance noise, the implementation of the above-described algorithm provides versatility because of being capable of handling the noise emitted by various heaters with different high-frequency disturbance noise property. In addition, if all high-frequency disturbance noise is cut by using a digital circuit, a calculation cost is possibly expensive, and real-time performance is possibly lost slightly. For this reason, a noise cutting circuit having a two-stage configuration may be mounted, the two-stage configuration being configured to previously cut the previously-known noise frequency components by using the BSF 602 that is the analog circuit shown in FIG. 6, and then, removing the noise components out of the cutting band by using the digital circuit. In this manner, the high-frequency disturbance noise can be cut at a higher speed.

<Details of AE-Wave Analyzing Circuit>

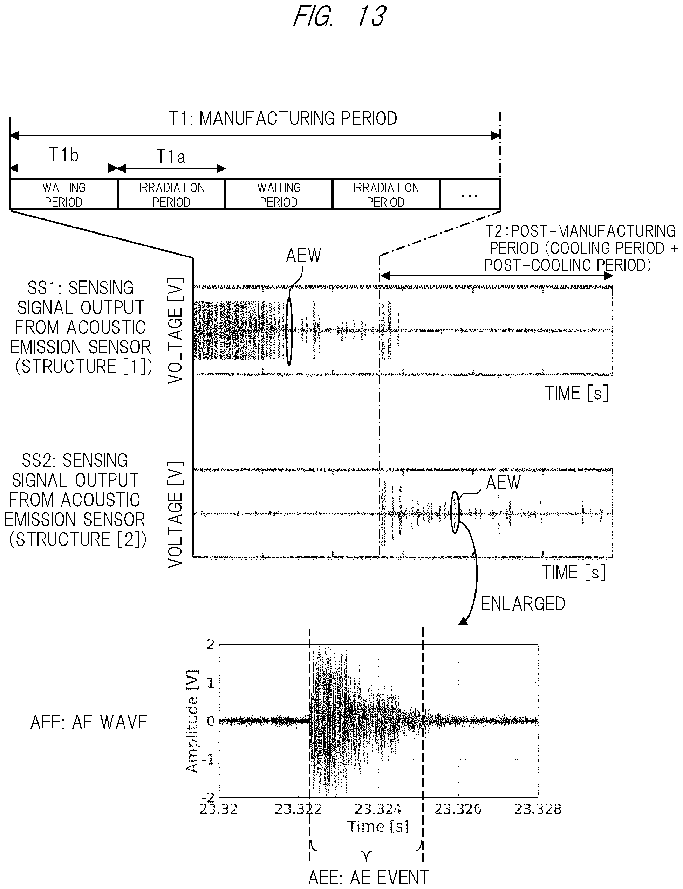

FIG. 13 is a waveform chart showing an example of the sensing signal output from the acoustic emission sensor in FIG. 5. FIG. 13 shows the sensing signals SS1 and SS2 of the acoustic emission sensor 23 obtained by targeting structures [1] and [2] that are different from each other. FIG. 13 also shows the sensing signals SS1 and SS2 obtained in the manufacturing period T1 and the post-manufacturing period T2. The manufacturing period T1 is the period during which the manufacturing is performed using the manufacturing apparatus, and includes a laser irradiation period T1a and a standby period T1b (T1b1, T1b2) as shown in FIG. 11A and others. On the other hand, the post-manufacturing period T2 includes the cooling period and the post-cooling period as described in FIG. 1B and others.

The sensing signal SS1 obtained from the structure [1] contains a large amount of AE waves AEW in the manufacturing period T1, and hardly contains the AE wave AEW in the post manufacturing period T2. In this case, the AE wave AEW is easily generated particularly in the standby period T1b2 after the laser irradiation shown in FIG. 11A. On the other hand, the sensing signal SS2 obtained from the structure [2] contains a large amount of the AE waves AEW in the post-manufacturing period T2, and hardly contains the AE wave AEW in the manufacturing period T1. For this reason, it is desirable to use the acoustic emission sensor 23 to detect the sound waves in not only the manufacturing period T1 but also the post-manufacturing period T2.

In this case, if a crack occurs or propagates on the structure, a burst-type AE wave is often detected by the acoustic emission sensor 23. As shown in the enlarged figure in FIG. 13, the burst-type AE wave has a shape having a sharply-increasing signal intensity and attenuating while oscillating at a high frequency such as several tens of kHz to several hundreds of kHz (several MHz depending on an object). Such an individual burst-type AE wave is called AE event AEE. That is, the AE wave AEW is a generic term for the individual AE events AEE.

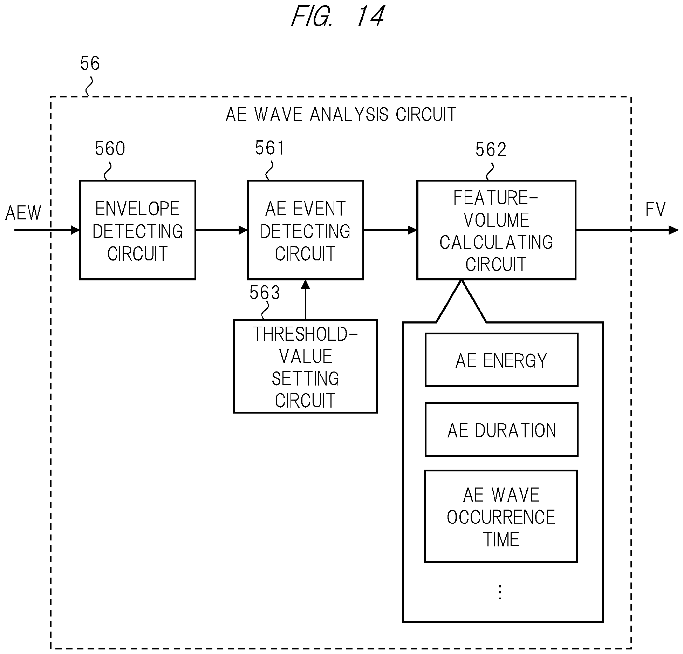

FIG. 14 is a block diagram showing a configuration example of the AE-wave analyzing circuit in FIG. 5. The AE-wave analyzing circuit 56 shown in FIG. 14 includes an envelope detecting circuit 560, an AE-event detecting circuit 561, a feature-volume calculating circuit 562, and a threshold-value setting circuit 563. The envelope detecting circuit 560 outputs an envelope detection signal by detecting the envelope of AE wave AEW extracted by the above-described AE-wave extracting circuit 55. The AE-event detecting circuit 561 detects the AE event AEE by using a threshold value described later, based on the envelope detection signal output from the envelope detecting circuit 560. Note that the AE event AEE can be directly detected by the AE-event detecting circuit 561 without providing the envelope detecting circuit 560.

For the AE-event detecting circuit 561, the threshold-value setting circuit 563 sets the threshold value (such as a two-level voltage threshold value described later) for detecting the AE event. The threshold may be set through, for example, the user interface 52 shown in FIG. 5. The feature-volume calculating circuit 562 calculates a feature volume FV such as AE energy, AE duration, and AE occurrence time regarding the AE event AEE detected by the AE-event detecting circuit 561.

The AE-wave analyzing circuit 56 is achieved by, for example, a digital circuit including a processor such as a CPU (Central Processing Unit). However, the AE-wave analyzing circuit 56 can also be achieved by an analog circuit or a combination of analog and digital circuits. In this case, a digital-to-analog converter (DAC) may be arranged before the envelope detecting circuit 560, or the noise cutting circuit in FIG. 6 may be achieved by the BSF 602 in the first extracting circuit 60 so that the output signal of the main amplifier 603 is input to the envelope detecting circuit 560. Alternatively, a full-wave rectification circuit or the like may be further arranged before the envelope detecting circuit 560.

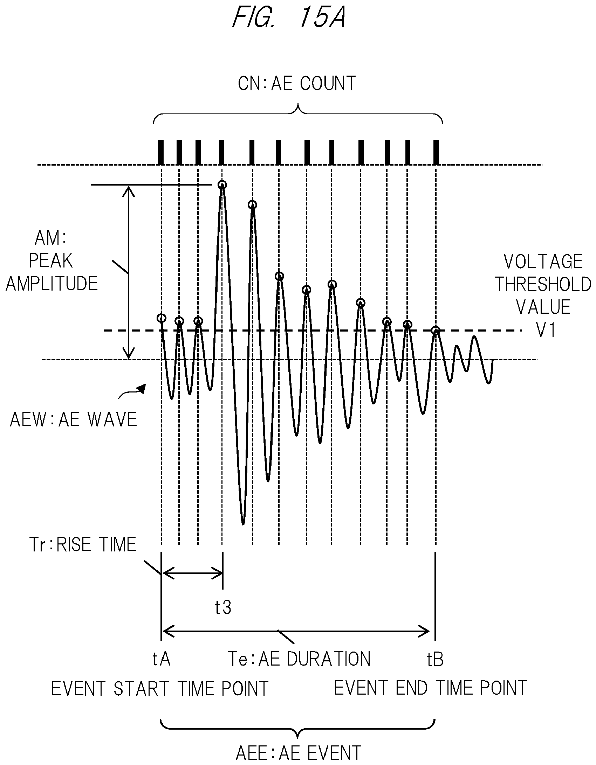

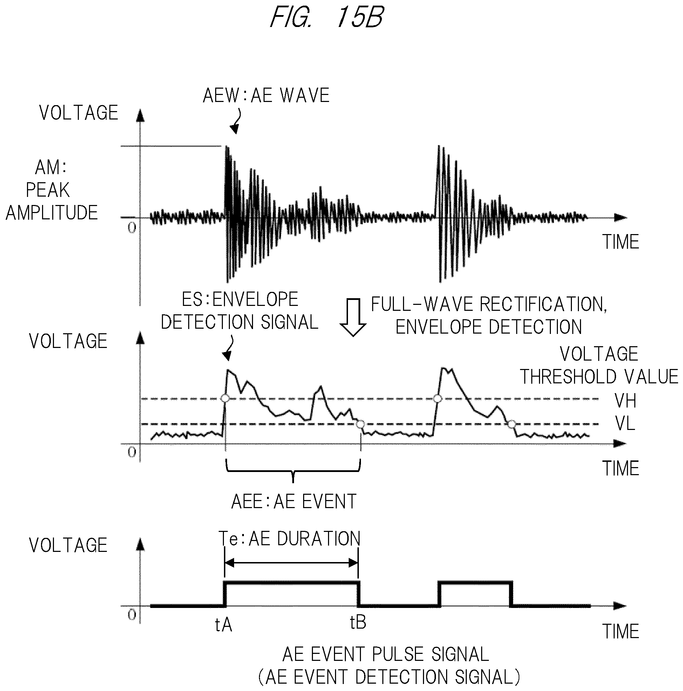

Each of FIG. 15A and FIG. 15B is a diagram showing an example of a method of detecting the different AE events in the AE-wave analyzing circuit in FIG. 14. Either use of the detecting method shown in FIG. 15A or 15B can be previously set. Also, the AE-event detecting method is not limited to the method shown in FIG. 15A and FIG. 15B, and may be a different method.

FIG. 15A shows a method for detecting the AE events AEE while using a one-level voltage threshold value V1 as the threshold value. FIG. 15A shows the AE wave AEW taking a vertical axis as the voltage value and a horizontal axis as time. The AE wave AEW has a peak amplitude AM. The AE-event detecting circuit 561 compares the amplitude of the AE wave AEW with the voltage threshold value V1, and counts the number of times of the excess of the amplitude of the AE wave AEW over the voltage threshold value V1, as an AE count CN.

Also, the time point tA is the start time point of the AE event AEE, and the time point tB is the end time point of the AE event AEE. The AE duration Te of the AE event AEE is the time from the time point tA to the time point tB, and is calculated based on the AE count CN. The rise Tr of the AE event AEE is the time from the time point tA to the time point t3 of the peak amplitude. Such an AE-event detecting method can be achieved by, for example, a digital circuit.

FIG. 15B shows a method of detecting the AE events AEE while using two-level voltage threshold values VH and VL that are high and low. The envelope detecting circuit 560 receives the AE wave AEW that is the analog signal, as an input, performs full-wave rectification and envelope detection, and outputs an envelope detection signal (envelope waveform) ES. The envelope is a line connecting the points of the peak amplitude of the voltage. The envelope detection signal ES shown in FIG. 15B is a signal formed by the full-wave rectification followed by the envelope detection on the AE wave AEW, the full-wave rectification converting a negative voltage portion to a positive voltage.

The AE-event detecting circuit 561 detects as one AE event AEE, during the time period from when the magnitude, that is the voltage level in this example, of the envelope detection signal ES is higher than the voltage threshold value (first threshold value) VH to when the voltage level is lower the voltage threshold value (second threshold value) VL which is lower than the voltage threshold value VH. Then, the AE-event detecting circuit 561 outputs an AE event pulse signal AP that becomes at an ON-level during the time period when the AE event AEE is generated, in other words, outputs a detected signal of AE event.

In FIG. 15B, note that the time point tA is the start time point of the AE event AEE, and is a time point at which the voltage level of the envelope detection signal ES becomes higher than the voltage threshold value VH. The time point tB is the end time point of the AE event AEE, and is a time point at which the voltage level of the envelope detection signal ES becomes lower than the voltage threshold value VL. Also, the time from the time point tA to the time point tB is the AE duration Te.

The feature-volume calculating circuit 562 shown in FIG. 14 calculates each feature volume FV of the AE event AEE detected by the AE-event detecting circuit 561. The feature volume FV includes the peak amplitude AM, the AE duration Te, the AE generation time (time point tA) shown in FIG. 15B, AE energy and others. The AE energy is expressed as an area of the AE wave AEW (AE event AEE), and is indicated by, for example, a value of integral of the envelope detection signal ES in an interval from the time point tA to the time point tB. The feature-volume calculating circuit 562 can detect the AE duration Te by, for example, measuring a pulse width of the AE event pulse signal AP shown in FIG. 15B while using a counter and the others. The feature-volume calculating circuit 562 can also detect the AE energy while using an integrator and others.

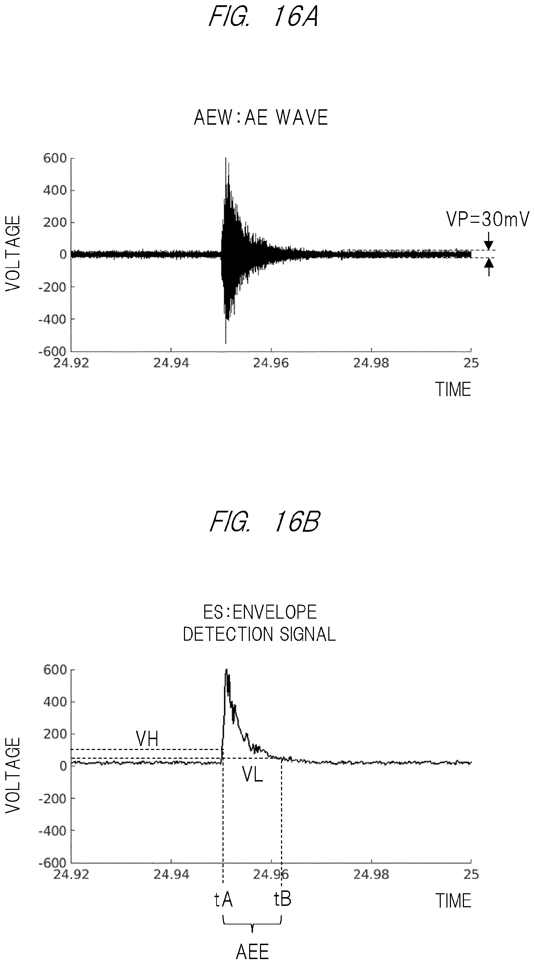

Each of FIG. 16A and FIG. 16B is a diagram for explaining an example of an examination result of the AE-wave analyzing circuit shown in FIG. 14. FIG. 16A shows the actual AE wave AEW extracted by the AE-wave extracting circuit 55 and input to the AE-wave analyzing circuit 56. In FIG. 16A, a peak-to-peak voltage VP of the background noise was 30 mV. FIG. 16B shows a waveform of the envelope detection signal ES provided by the full-wave rectification and the envelope detection on the AE wave AEW shown in FIG. 16A under the use of the full-wave rectification circuit and the envelope detecting circuit 560.

Here, the envelope detection signal ES shown in FIG. 16B was targeted, and the AE event AEE was detected under the use of the AE-event detecting circuit 561 with the two-level threshold value described in FIG. 15B. A voltage threshold value VH on the high voltage side was 100 mV, and a voltage threshold value VL on the low voltage side is 50 mV. As a result, the envelope detection signal ES shown in FIG. 16B was detected as a single AE event AEE. The voltage threshold value VH on the high voltage side makes it difficult to erroneously detect the start time point tA due to the background noise or the like, and the voltage threshold value VL on the low voltage side makes it possible to properly define the end time point tB.

<Details of Circuit for Quality Determination>

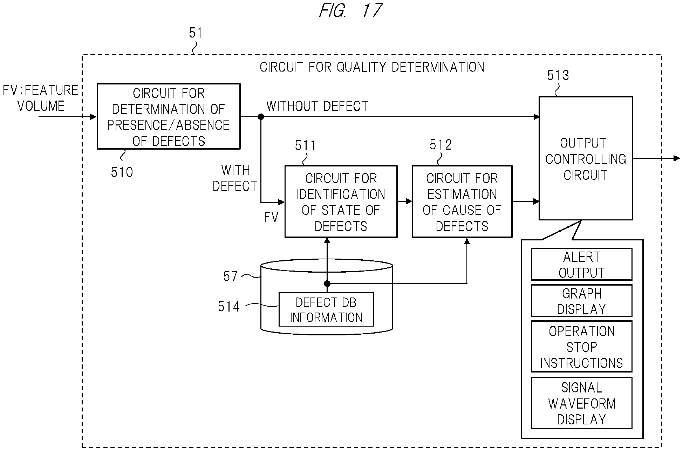

FIG. 17 is a block diagram showing a configurational example of a circuit for quality determination in FIG. 5. The circuit for quality determination 51 is achieved by, for example, a digital circuit including a processor such as a CPU, and determines the quality of the structure 40, based on the feature volume FV from the AE-wave analyzing circuit 56. The circuit for quality determination 51 includes a circuit for determination of the presence/absence of defects 510, a circuit for identification of the state of defects 511, a circuit for estimation of the cause of defects 512, and an output controlling circuit 513.

The circuit for determination of the presence/absence of defects 510 determines whether there is the defect in the structure 40 or not. Specifically, the circuit for determination of the presence/absence of defects 510 determines that there is no defect if no AE event AEE has been generated, or determines that there is the defect if the AE event AEE has been detected. If there is the defect, the circuit for identification of the state of defects 511 identifies the defect state based on the feature volume FV. The circuit for estimation of the cause of defects 512 estimates a cause of the defect, based on the identified defect state identified by the circuit for identification of the state of defects 511.

As explained in the description of the feature-volume calculating circuit 562 in FIG. 14, the feature volume FV is, for example, the peak amplitude AM, the AE duration Te, the AE generation time, and the AE energy. Here, the memory 57 is, for example, a flash memory or a nonvolatile memory such as a hard disk drive, and previously stores defect database (abbreviated as DB) information 514.

The defect DB information 514 is previously registered via, for example, the user interface 52 shown in FIG. 5 by the user. The defect DB information 514 represents, for example, a correlation among a numerical range for some or all of the above-described feature volumes FV, the defect state corresponding thereto, and the cause of the defect estimated from the defect state and its countermeasures. The defect state represents, for example, the phenomenon, the defect level and others. The defect level can be determined by, for example, the value of the AE energy and others.

As a specific example, for example, if a feature volume FV having the AE wave AEW detected with an amplitude that is equal to or higher than a certain value during the manufacturing period, and that damps subsequently is obtained, the defect phenomenon may be regarded as a state where the structure 40 is broken away from the manufacturing stage 41. In this case, the cause of the defect is estimated to be a lack of penetration. As the countermeasures for this, for example, increase in the laser output power, decrease in the scanning speed and others can be exemplified.

Also, for example, if the AE wave AEW is detected in the post-cooling period, based on the AE generation time, a state of occurrence of cracks due to delayed fracture of the structure 40 may be regarded as the defect phenomenon. In this case, the cause of the defect is estimated to be excessive residual stress or stress concentration on impurities. As the countermeasures for this, for example, stress relief annealing, reduction in the risk that supersaturated hydrogen is mixed in the process and others are exemplified.

The circuit for identification of the state of defects 511 identifies the defect state based on such defect DB information 514. Similarly, the circuit for estimation of the cause of defects 512 estimates the cause of the defect based on such defect DB information 514, and also presents the countermeasures for reduction of them. The output controlling circuit 513 performs predetermined output to, for example, the display apparatus 520 shown in FIG. 5, the manufacturing controller 11 shown in FIG. 1A and others, based on the output signal from the circuit for determination of the presence/absence of defects 510 or the output signal from the circuit for estimation of the cause of defects 512.

As a content of the output, for example, alert output to the display apparatus 520, graph display, signal waveform display, operation stop instructions to the manufacturing controller 11 and others are exemplified. The alert output notifies the user of the anomaly, and may be, for example, audio output from a loudspeaker, light emission from a lamp and others other than the display screen on the display apparatus 520. Also, the alert output may have, for example, a plurality of levels each corresponding to the defect level described above.

The operation stop instruction is an instruction to immediately stop the manufacturing operation performed by the manufacturing apparatus. The operation stop instruction is output when, for example, the AE event AEE is detected at a very high frequency, when the AE event AEE with very high AE energy is detected and others. In the graph display, the identification results of the circuit for identification of the state of defects 511 and the estimation results of the circuit for estimation of the cause of defects 512 are displayed as, for example, a graph showing the generation time of each AE event AEE, a link to each AE event AEE and others. In the signal waveform display, for example, the actual waveform of the AE wave AEW is displayed. The actual waveform is displayed by, for example, using the output signal from the AE-wave extracting circuit 55 shown in FIG. 5.

<Details of User Interface>

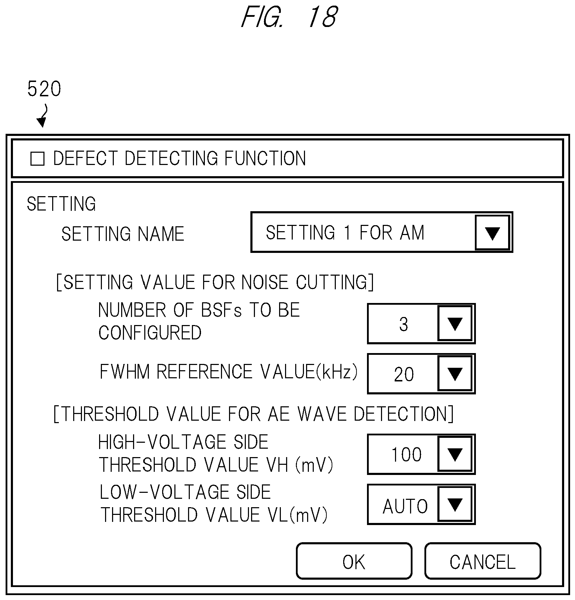

FIG. 18 is a diagram showing an example of the input screen displayed on the display apparatus in the user interface in FIG. 5. With reference to the input screen displayed on the display apparatus 520 as shown in FIG. 18, the user can optionally set the setting value for the noise cutting and the threshold value for the AE wave detection through the input apparatus 521. In this example, as the setting value for the noise cutting, the number of BSFs to be configured in the noise cutting circuit shown in FIG. 8 and others, in other words, the upper limit number of the same, and the reference value of the full width at half maximum (FWHM) used in step S104 in FIG. 10 can be set. Note that automatic setting can also be selected as the number of BSFs to be configured.

Also, if the two-level voltage threshold values shown in FIG. 15B are used as the threshold value for the AE wave detection, the voltage threshold value on the high voltage side VH and the voltage threshold value on the low voltage side VL can be set. In addition, the automatic setting can be selected for the voltage threshold values VH and VL. If the automatic setting is selected, for example, the threshold-value setting circuit 563 shown in FIG. 14 simply needs to measure the peak-to-peak voltage VP of the background noise as shown in FIG. 16A, and set the voltage threshold value on the high voltage side VH to be a value that is equal to or larger than twice the peak-to-peak voltage VP. Also, the threshold-value setting circuit 563 simply needs to determine the voltage threshold value on the low voltage side VL based on a predetermined formula such as "VL = (VH - VP)/2".

<Main Effects of First Embodiment>

As described above, in the method according to the first embodiment, the high-frequency disturbance noise generated in the frequency band of the AE wave can be cut by providing the noise cutting circuit (BSF 602, 621) as shown in FIG. 6. This makes it possible to detect the AE wave at high accuracy. Furthermore, the high-frequency disturbance noise whose peak frequency changes over time can be cut by providing the frequency analyzing circuit 620 that executes the noise cutting algorithm based on the time tracking as shown in FIG. 10. This makes it possible to detect the AE wave at higher accuracy. Then, based on the AE wave detected at high accuracy, the highly accurate quality control of the structure can be achieved.

(Second Embodiment)

<Outline of Analyzer>

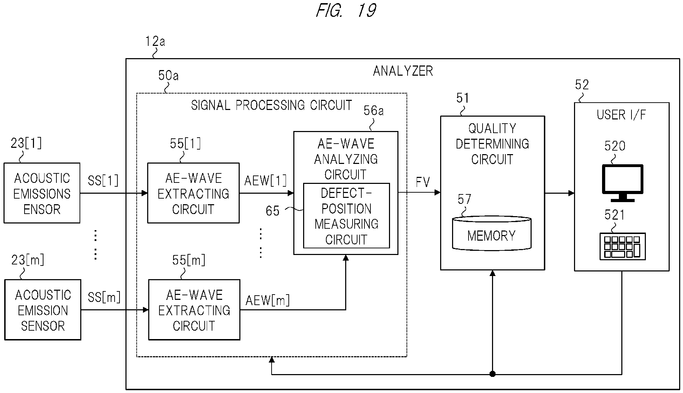

FIG. 19 is a schematic diagram showing a configurational example of the analyzer in FIGs. 1A, 1B, 2A and 2B in a state monitor system according to a second embodiment. The analyzer 12a shown in FIG. 19 differs from the configuration shown in FIG. 5 in the following points. The first difference is that the state monitor system includes "m" ("m" is an integer of 2 or more) acoustic emission sensors 23[1] to 23[m] arranged at different positions from one another.
As the second difference, the signal processing circuit 50a includes m AE-wave extracting circuits 55[1] to 55[m] corresponding to the m acoustic emission sensors 23[1] to 23[m]. As the third difference, the AE-wave analyzing circuit 56a in the signal processing circuit 50a includes a defect-position measuring circuit 65. Described in detail later, the defect-position measuring circuit 65 measures the generating position of the AE wave AEW derived from the structure 40 by detecting the time difference between the m AE waves AEW[1] to AEW[m] extracted by the m AE-wave extracting circuits 55[1] to 55[m].

<Details of Defect-Position Measuring Circuit>

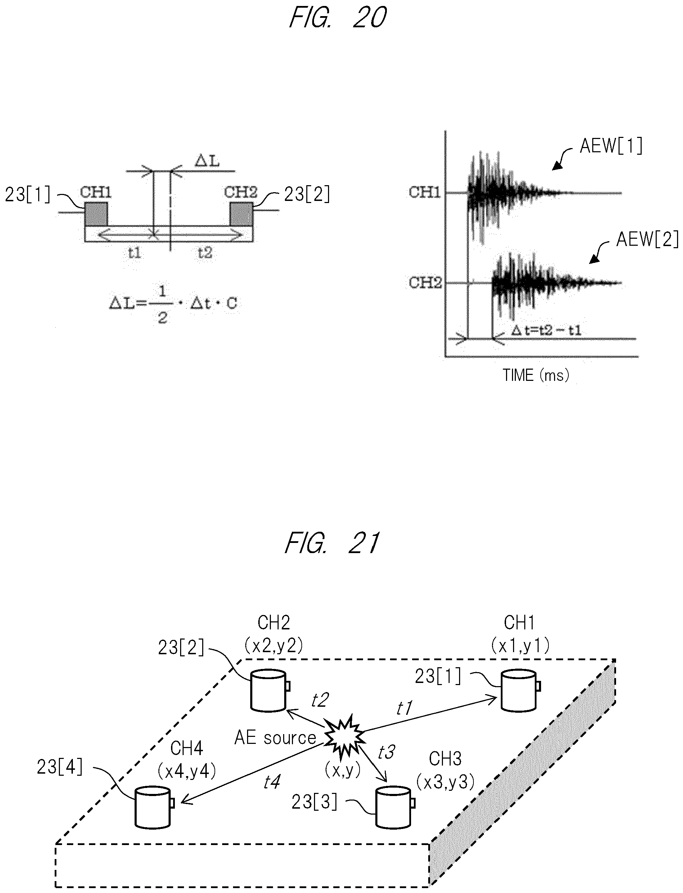

As described in the first embodiment, the presence or absence of the occurrence of defect in the structure 40 can be determined by detecting the AE wave AEW. Furthermore, if two or more acoustic emission sensors 23[1] to 23[m] are used, the position of the generation source of the AE wave AEW, that is, the defect position in the structure 40 can be measured under the use of the arrival time difference among the AE waves AEW[1] to AEW[m] output from the acoustic emission sensors 23[1] to 23 [m] .
Each of FIG. 20 and FIG. 21 is a schematic diagram for explaining an operation principle of the defect-position measuring circuit in FIG. 19. For example, in a case of the position measurement on one dimension, as shown in FIG. 20, under use of at least two acoustic emission sensors 23[1] and 23[2], a distance from the center $\Delta L$ can be calculated using the arrival time difference $\Delta t$ of the AE wave AEW at the two acoustic emission sensors 23[1] and 23[2] and a sound speed in a previously-known object C. For the sound speed C, if the object is sufficiently thick, the longitudinal wave sound speed is used since a longitudinal wave reaches first. If the object is a thin plate, it is appropriate to use a sound speed of a Rayleigh wave or a Lamb wave.
If it is assumed that the AE wave AEW is generated at the position between the two acoustic emission sensors 23[1] and 23[2], a relationship in Equation (1) is established among a position x of the generation source of the AE wave AEW, installation positions x1 and x2 of the two acoustic emission sensors 23 [1] and 23[2], and the time t1 and t2 at which the generated AE wave AEW arrives at the two acoustic emission sensors 23[1] and 23 [2]. The term "C" is the sound speed of the AE wave AEW. Furthermore, if the arrival time difference of the AE wave AEW between the acoustic emission sensors 23[1] and 23[2] is expressed as "$\Delta t12 = t1 - t2$", a relationship in Equation (2) is established based on Equation (1).

$$C \times t1 = \left|x - x1\right|, \; C \times t2 = \left|x - x2\right| \; \ldots \; (1)$$

$$C \times \Delta t12 = \left|x - x1\right| - \left|x - x2\right| \; \ldots \; (2)$$

In Equation (2), the sound speed C and the installation positions x1 and x2 of the acoustic emission sensors 23 [1] and 23 [2] are previously known. Accordingly, the defect-position measuring circuit 65 can determine the one-dimensional position x of the generation source of the AE wave AEW, based on equation (2), by detecting the arrival time difference $\Delta t12$ of the AE wave AEW to the acoustic emission sensors 23[1] and 23[2]. In this case, it is sufficient that, for example, the defect-position measuring circuit 65 detects the start time point tA (see, for example, FIG. 15B) of the two AE events AEE included in the two AE waves AEW[1] and AEW[2] while using the AE-event detecting circuit 561 shown in FIG. 14. Then, it is sufficient that the defect-position measuring circuit 65 detects the time difference between the two start time points tA as the arrival time difference $\Delta t12$.

In a case of the position measurement on two dimensions, as shown in FIG. 21, the position (x, y) on the plane can be obtained under use of at least three or more (in this example, four) acoustic emission sensors 23 [1] to 23 [4]. For example, equation (3) and equation (4) are established among the respective installation positions (x1, y1), (x2, y2), and (x3, y3) of the three acoustic emission sensors 23[1] to 23[3], the arrival time difference $\Delta t12$ between the two acoustic emission sensors 23[1] and 23[2], and the arrival time difference $\Delta t13$ between the two acoustic emission sensors 23[1] and 23[3]. Based on equation (3) and equation (4), the two-dimensional position (x, y) of the generation source of the AE wave AEW can be obtained.

[Numerical Equation 1]

$$C \times \Delta t12 = \sqrt{(x - x1)^2 + (y - y1)^2} - \sqrt{(x - x2)^2 + (y - y2)^2} \quad \cdots (3)$$

[Numerical Equation 2]

$$C \times \Delta t13 = \sqrt{(x - x1)^2 + (y - y1)^2} - \sqrt{(x - x3)^2 + (y - y3)^2} \quad \cdots (4)$$

Furthermore, in a case of the position measurement on three dimensions, the three-dimensional position (x, y, z) of the generation source of the AE wave AEW can be similarly obtained under use of at least four acoustic emission sensors 23 [1] to 23[4]. Here, the measurement of the three-dimensional position X = (x, y, z) under use of a multi-channel acoustic emission sensor is considered below. The installation position of the i-th acoustic emission sensor 23[i] is expressed as "Xi = (xi, yi, zi) $(1 \le i \le n)$". The term "n" is the total number of the acoustic emission sensors. In this case, if "$\Delta t_{ij}$" represents the arrival time difference of the AE wave AEW between the acoustic emission sensors 23[i] and 23[j], the relationship in Equation (5) is established.

$$C \times \Delta t_{ij} = \left|X - Xi\right| - \left|X - Xj\right| \; \ldots \; (5)$$

Based on the equation (5), the three-dimensional position "X = (x, y, z)" of the generation source of the AE wave AEW can be obtained. However, the equation (5) is a nonlinear equation and is difficult to be analytically solved, but can be solved by, for example, a numerical analysis using a computer device.

<Main Effects of Second Embodiment>

As described above, the use of the method according to the second embodiment can provide the various effects described in the first embodiment, and can measure the defect position in the structure 40 when the plurality of acoustic emission sensors 23 and the defect-position measuring circuit 65 are provided. Particularly, if the defect occurs inside the structure 40 during the manufacturing of the structure 40 having a complicated three-dimensional shape by the metal printing process, the defect position may be difficult to be found by appearance check. Furthermore, if the defect occurs, for example, in the state shown in FIG. 1B, during the post-manufacturing period, information such as a position of a certain layer in the middle of the manufacturing is not obtained at all, and therefore, it may be more difficult to find the defect position. For this reason, it is beneficial to provide the defect-position measuring circuit 65.

(Third Embodiment)

<Outline of Analyzer>

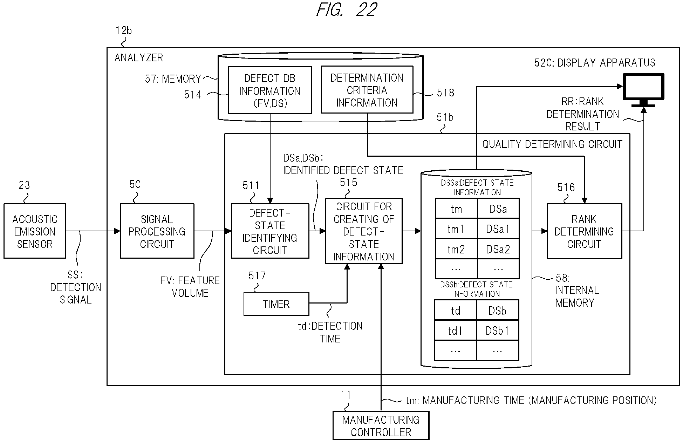

FIG. 22 is a schematic diagram showing a configurational example of the analyzer in FIGs. 1A, 1B, 2A and 2B in a state monitor system according to a third embodiment. For example, in the method of the Patent Document 1, all structures including the defect are determined to be defective. However, the structure including the defect may be occasionally regarded to be the non-defective product, depending on the defective level and the like. Specifically, it is occasionally desirable that the structure should be determined to be the defective product/non-defective product for each intended use of the structure, based on, for example, comprehensive information of the number of defects, a size of the same, a density of the same, a position of the same, a type (horizontal crack, vertical crack, breaking away and others) of the same and others. For this, a system for quality control of causing the structure to have neither over performance nor under performance but suitable performance, in other words, a system for highly-accurate quality control of the structure is necessary.

Accordingly, the analyzer 12b shown in FIG. 22 includes a signal processing circuit 50, a circuit for quality determination 51b, a memory 57, and a display apparatus 520. The signal processing circuit 50 receives the sensing signal SS detected at the acoustic emission sensor 23, extracts the AE wave AEW by cutting various disturbance noises, and calculates the feature volume FV by analyzing the AE wave AEW, as shown in FIG. 5 of the first embodiment and the others.

The memory 57 stores the defect DB information 514 as described in FIG. 17 and determination criteria information 518. The defect DB information 514 represents correspondence between a defect state DS of the structure 40 and the feature volume FV. The defect state DS represents the defect phenomenon (horizontal crack, vertical crack, breaking away and others) and the defect level (such as classification according to size). For example, the user creates the defect DB information 514 by deriving this correspondence from physical analysis of the defect or others, and previously stores this information into the memory 57.

The circuit for quality determination 51b is typically achieved by a program processing using a processor included in a microcontroller, a computer, or others. However, the present invention is not limited to this achievement method, and a part or entire of the circuit for quality determination 51b can be also achieved by a FPGA (Field Programmable Gate Array), an ASIC (Application Specific Integrated Circuit) or others.

The circuit for quality determination 51b includes a circuit for identification of the state of defects 511, a circuit for creating of the defect-state information 515, an internal memory 58, a rank determining circuit 516, and a timer 517. As shown in FIG. 17, the circuit for identification of the state of defects 511 identifies the defect state DS with reference to the defect DB information 514 while using at least one feature volume FV of the plurality of feature volumes FV that are the peak amplitude AM, the AE duration Te, the AE generation time, the AE energy and the others.

In other words, the defect state DS occasionally has correspondence with not all feature volumes FV but one/some feature volumes FV. In this case, for example, the correspondence between the defect state DS and a numerical range of one/some feature volumes FV is determined, and the remaining feature volumes FV are determined as "don't-care" in the defect DB information 514. The circuit for identification of the state of defects 511 outputs the identified defect state DSa identified in the manufacturing period T1 and the identified defect state DSb identified in the post-manufacturing period T2 shown in FIG. 13 and the others to the circuit for creating of the defect-state information 515.

The circuit for creating of the defect-state information 515 creates defect-state information DSSa based on information of manufacturing time "tm" output from the manufacturing controller 11, and stores it into the internal memory 58. The defect-state information DSSa includes single or plural correspondences between the identified defect state DSa identified in the manufacturing period T1 and the manufacturing time tm. In other words, the defect-state information DSSa includes information indicating that, for example, a defect with a defect state DSa1 is generated at certain manufacturing time tm1 while a defect with a defect state DSa2 is generated at another manufacturing time tm2.

In this case, the manufacturing controller 11 sequentially recognizes which position of the structure 40 is manufactured at which manufacturing time. Therefore, the information of the manufacturing time tm is equivalent to the information of the manufacturing position. Accordingly, the defect-state information DSSa substantially includes information indicating what defect type has been generated at which manufacturing position of the structure 40.

The circuit for creating of the defect-state information 515 creates the defect-state information DSSb based on information of detecting time "td" of the AE event AEE in the post-manufacturing period T2, and stores it into the internal memory 58. The defect-state information DSSb includes single or plural correspondences between the identified defect state DSb identified in the post-manufacturing period T2 and the detecting time td. In other words, the defect-state information DSSb includes information indicating that, for example, a defect with a defect state DSb1 is generated at certain detecting time td1. In this case, the information of the detecting time td is acquired from the timer 517. A timer operation is started by the timer 517 at, for example, start of the post-manufacturing period T2. In the post-manufacturing period T2, the information of the manufacturing position is indefinite unlike in the manufacturing period T1.

The rank determining circuit 516 targets the manufacturing period T1, and determines a quality rank of the structure 40, based on the defect-state information DSSa including the identified defect state DSa and the determination criteria information 518 inside the memory 57. And, the rank determining circuit 516 targets the post-manufacturing period T2, and determines the quality rank of the structure 40, based on the defect-state information DSSb including the identified defect state DSb and the determination criteria information 518 inside the memory 57.

Specifically, the rank determining circuit 516 determines, for example, good/bad of the structure 40 and a rank indicating a degree of the good/bad. For example, in the case of the determination of the good/bad of the structure 40, during the manufacturing period T1, the determination criteria indicating at least how many defects with the certain identified defect state Dsa cause the structure to be determined as the defective product, or the determination criteria indicating that the structure is determined as the defective product when the defect is generated at the predetermined manufacturing time tm (that is the manufacturing position) is suitably defined in the determination criteria information 518.

As another example, during the post-manufacturing period T2, determination criteria indicating at least how many defects with the certain identified defect state DSb cause the structure to be determined as the defective product is suitably defined in the determination criteria information 518. Alternatively, during the post-manufacturing period T2, determination criteria indicating at least how many defects with the certain identified defect state DSb in a certain period cause the structure to be determined as the defective product is suitably defined in the determination criteria information 518.

As still another example, during the manufacturing period T1 and the post-manufacturing period T2, determination criteria indicating at least how many defects with the certain identified defect state DSa and defects with the certain identified defect state DSb in total cause the structure to be determined as the defective product is suitably defined in the determination criteria information 518. The rank determining circuit 516 determines the good/bad of the structure 40 with reference to such determination criteria information 518 and the defect-state information DSSa, DSSb. When the degree of the good/bad of the structure 40 is determined, such determination criteria may be subdivided to be defined.

In this case, the good/bad of the structure 40 is desirably determined based on not only the presence/absence of the defect as described in the Patent Document 1 but also the defect level or phenomenon (horizontal crack, vertical crack, breaking away and others) or others acquired from the identified defect state DSa or DSb for each intended use of the structure 40. For example, depending on the intended use of the structure 40, the structure 40 may be occasionally determined to be the non-defective product if the defect is the small defect of the predetermined phenomenon.

Further, the good/bad of the structure 40 is more desirably determined based on comprehensive information of the number of the defect, the size of the same, the density of the same, the type of the same, and others acquired from the defect-state information DSSa, DSSb. For example, the structure 40 without the necessity of high reliability occasionally may be determined to be the non-defective product even if including a plurality of small defects. However, depending on the manufacturing position (such as a manufacturing position on which the stress is easily applied), the structure 40 occasionally should be determined to be the defective product even if the defect is small to some extent.

In the necessity of various determination criteria as described above, since the identified defect states DSa and DSb and the defect-state information DSSa and DSSb are used, the user can freely define the suitable determination criteria based on such information as the determination criteria information 518 in accordance with the intended use of the structure 40 or others. The determination criteria at this time are, for example, the good/bad determination, the rank determination indicating the degree of the good/bad or others. As a result, the quality of the structure 40 can be accurately controlled. The rank determining circuit 516 outputs a rank determination result RR that is determined as described above to the display apparatus 520.

<State Monitor Method>

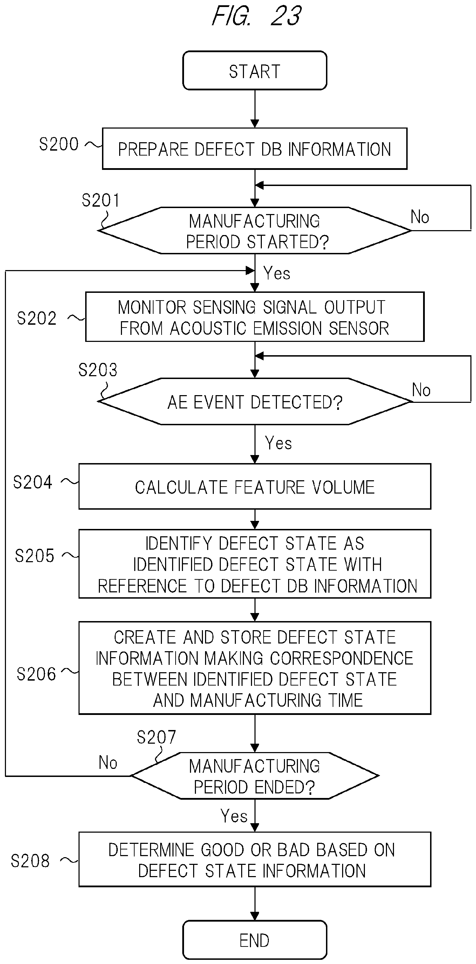

FIG. 23 is a flowchart showing an example of a process content of a state monitor method in the manufacturing period, using the analyzer shown in FIG. 22. In a step S200 (preparation step), the user previously stores the defect DB information 514 representing the correspondence between the defect state DS of the structure 40 and the feature volume FV into the memory 57. In a step S201, the analyzer 12b waits for the start of the manufacturing period T1. Once the manufacturing period T1 starts in the step S201, the analyzer 12b repeatedly executes processes of steps S202 to S206 until end of the manufacturing period T1 (step S207).

In the step S202, the analyzer 12b, specifically the signal processing circuit 50, monitors the sensing signal SS output detected at the acoustic emission sensor 32. In the step S203 (detection step), the signal processing circuit 50, specifically the AE-event detecting circuit 561, detects the AE event of the sensing signal SS output detected at the acoustic emission sensor 32. In the step S204, the signal processing circuit 50, specifically the feature-volume calculating circuit 562, calculates the feature volume FV of the detected AE event.

Subsequently, in the step S205 (identification step), the circuit for identification of the state of defects 511 identifies the defect state DS as the identified defect state DSa with reference to the defect DB information 514 while using at least one of the respective feature volumes FV detected in the step S204. In the step S206 (creation step), the circuit for creating of the defect-state information 515 creates the defect-state information DSSa that makes the correspondence between the identified defect state DSa identified in the step S205 and the manufacturing time tm output from the manufacturing controller 11, and stores this information into the internal memory 58.

After the processes described above, the manufacturing period T1 ends in the step S207. If the manufacturing period T1 ends, the rank determining circuit 516 determines the rank of the completed structure 40 in the step S208 (determination step), based on the defect-state information DSSa created and stored in the step S206.

In the step S208 (determination step), for example, based on the identified defect state DSa included in the defect-state information DSSa, the rank determining circuit 516 specifically recognizes the defect phenomenon, level, the number of defects or the others, and determines the rank of the structure 40 with reference to the determination criteria information 518. Alternatively, based on the identified defect state DSa included in the defect-state information DSSa and the manufacturing time tm, the rank determining circuit 516 recognizes what defect type has been generated at which manufacturing position in the structure 40, and determines the rank of the structure 40 with reference to the determination criteria information 518.

Then, the rank determining circuit 516 may display the rank determination result RR acquired in the step S208 or the defect-state information DSSa created in the step S206 on the display apparatus 520 although its illustration is omitted.

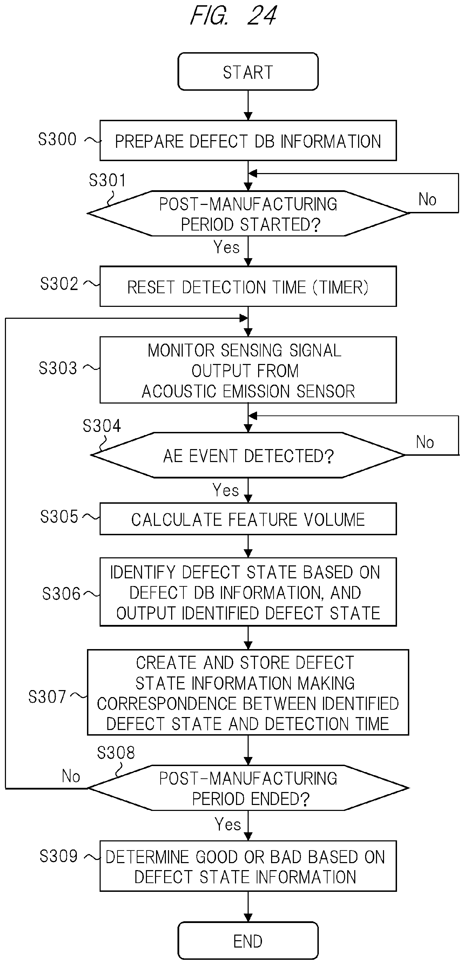

FIG. 24 is a flowchart showing an example of a process content of a state monitor method using the analyzer shown in FIG. 22 in the post-manufacturing period. In a step S300 (preparation step), the user previously stores the defect DB information 514 representing the correspondence between the defect state DS of the structure 40 and the feature volume FV into the memory 57. In a step S301, the analyzer 12b waits for the start of the post-manufacturing period T2. Once the post-manufacturing period T2 starts in the step S301, the analyzer 12b resets the detecting time td on the timer 517, and starts the timer 517 (step S302). Then, the analyzer 12b repeatedly executes processes of steps S303 to S307 until end of the post-manufacturing period T2 (step S308).

The processes of steps S303 to S307 are the same as the processes of steps S202 to S206 shown in FIG. 23. However, in the step S307 (creation step), instead of the manufacturing time tm acquired from the manufacturing controller 11 in the step S206, the detecting time td on the timer 517 is used as the time of the defect-state information DSSb.

Then, Once the post-manufacturing period T2 ends in the step S308, the rank determining circuit 516 determines the quality of the completed structure 40 in the step S309 (determination step), based on the defect-state information DSSb created and stored in the step S307. Specifically, for example, based on the identified defect state DSb included in the defect-state information DSSb, the rank determining circuit 516 recognizes phenomenon, level and the number of defects, and determines the rank of the structure 40 with reference to the determination criteria information 518.

<Main Effects of Third Embodiment>

As described above, by using the method according to the third embodiment, it becomes possible to perform the quality control of the structure at high accuracy. Specifically, as described in the first embodiment, it becomes possible to perform the quality control based on the AE wave AEW detected with high accuracy by cutting the high-frequency disturbance noise. In addition, it becomes possible to determine the quality of the structure 40, based on not only the presence/absence of the defect as described in the Patent Document 1 but also comprehensive information such as the number, size, density, position, type of the defect and others obtained based on the identified defect states DSa and DSb or the defect state information DSSa and DSSb. Particularly, it becomes possible to determine the quality of the structure 40 by reflecting the information on the defects generated in not only the manufacturing period T1 but also the post-manufacturing period T2.

In the foregoing, the invention made by the inventors of the present application has been concretely described based on the embodiments. However, the present invention is not limited to the foregoing embodiments, and various modifications can be made within the scope of the present invention. For example, the above-described embodiments have been explained in detail for understanding the present invention easily and are not always limited to the one including all structures explained above. Also, a part of the structure of one embodiment can be replaced with the structure of another embodiment, and besides, the structure of another embodiment can be added to the structure of one embodiment. Further, another structure can be added to/eliminated from/replaced with a part of the structure of each embodiment.

EXPLANATION OF REFERENCE CHARACTERS

    1... State monitor system

10a, 10b... Manufacturing apparatus
12, 12a, 12b... Analyzer
23... Acoustic emission sensor
25... Heater
40... Structure
55... AE-wave extracting circuit
56... AE-wave analyzing circuit
560... Envelope detecting circuit
561... AE-event detecting circuit
601... Band-pass filter
602, 621... Band-stop filter (Noise cutting circuit)
620... Frequency analyzing circuit
AEE... AE event
AEW... AE wave
ES ... Envelope detection signal
SS... Sensing signal
VH, VL... Voltage threshold value

**Claims**

1.  A state monitor system monitoring a state of three-dimensional printing process, comprising:

    an acoustic emission sensor outputting a sensing signal by sensing an acoustic wave;
    an AE-wave extracting circuit extracting, from the sensing signal, an AE (Acoustic Emission) wave taking a structure that is a manufacturing target of the three-dimensional printing process, as a generation source; and
    an AE-wave analyzing circuit analyzing the AE wave extracted by the AE-wave extracting circuit,
    wherein the AE-wave extracting circuit includes a noise cutting circuit cutting a first disturbance noise generated in a frequency band of the AE wave while using a band-stop filter.

2.  The state monitor system according to claim 1,
    wherein the AE-wave extracting circuit further includes a band-pass filter or a high-pass filter cutting a second disturbance noise having a frequency lower than the frequency band of the AE wave but passing the frequency band of the AE wave.

3.  The state monitor system according to claim 1 or 2,
    wherein the AE-wave extracting circuit further includes a frequency analyzing circuit sequentially extracting the sensing signal output detected at the acoustic emission sensor, in a unit of time, detecting a frequency band of the first disturbance noise by calculating a frequency spectrum of the extracted signal for each extraction in the unit of time, and variably controlling a property of the band-stop filter, based on the detected frequency band of the first disturbance noise.

4.  The state monitor system according to claim 3,
    wherein the frequency analyzing circuit detects a peak of the frequency spectrum at the time of the detection of the frequency band of the first disturbance noise, compares a full width at half maximum of a spectral component having the detected peak with a reference value, and determines that a frequency band of a spectral component having a narrower full width at half maximum than the reference value is the frequency band of the first disturbance noise.

5.  The state monitor system according to claim 3 or 4,
    wherein, at the time of the sequential extraction of the sensing signal from the acoustic emission sensor, in the unit of time, the frequency analyzing circuit extracts the sensing signal to overlap partial time.

6.  The state monitor system according to any one of claims 3 to 5,
    wherein the band-stop filter is consisted of a digital filter.

7.  The state monitor system according to any one of claims 3 to 5,

    wherein the frequency analyzing circuit detects the frequency bands of the first disturbance noise while taking "n" ("n" is an integer that is equal to or larger than 2) spectral intensities in a descending order of a spectral intensity to be an upper limit, and
the noise cutting circuit cuts the first disturbance noise while using "n" band-stop filters.

8. The state monitor system according to claim 7,
wherein each of the n band-stop filters is consisted of a frequency variable filter of an analog circuit type.

9. The state monitor system according to any one of claims 1 to 8,
wherein the AE-wave analyzing circuit includes:

an envelope detecting circuit outputting an envelope sensing signal by detecting an envelope of the AE wave extracted by the AE-wave extracting circuit; and
an AE-event detecting circuit detecting, as one AE event, a time period from when a magnitude of the envelope sensing signal is higher than a first threshold value to when the magnitude of the envelope sensing signal is lower than a second threshold value that is a value lower than the first threshold value.

10. The state monitor system according to any one of claims 1 to 9,

wherein "m" ("m" is an integer that is equal to or larger than 2) acoustic emission sensors are located at positions different from one another,
"m" AE-wave extracting circuits are provided to correspond to the m acoustic emission sensors, and
the AE-wave analyzing circuit further includes a defect-position measuring circuit measuring a position of an AE wave generated from the structure, by detecting a time difference among m AE waves extracted by the m AE-wave extracting circuits.

11. The state monitor system according to claim 1,
wherein the first disturbance noise is emitted from at least a high-frequency heater for preheating a manufacturing position of the structure.

12. A state monitor method of monitoring a state of three-dimensional printing process, comprising steps of:

extracting, from a sensing signal output detected at an acoustic emission sensor, an AE (Acoustic Emission) wave taking a structure that is a manufacturing target of the three-dimensional printing process, as a generation source;
analyzing the extracted AE wave; and
cutting a first disturbance noise generated in a frequency band of the AE wave at the time of the extraction of the AE wave.

13. The state monitor method according to claim 12, further comprising a step of, at the time of the extraction of the AE wave,
cutting a second disturbance noise having a frequency lower than the frequency band of the AE wave but passing the frequency band of the AE wave.

14. The state monitor method according to claim 12 or 13, further comprising steps of, at the time of the cut of the first disturbance noise:

sequentially extracting the sensing signal output detected at the acoustic emission sensor, in a unit of time;
detecting a frequency band of the first disturbance noise by calculating a frequency spectrum of the extracted signal for each extraction in the unit of time; and
cutting the first disturbance noise, based on the detected frequency band of the first disturbance noise.

15. The state monitor method according to claim 14, further comprising steps of, at the time of the detection of the frequency band of the first disturbance noise:

detecting a peak of the frequency spectrum;
comparing a full width at half maximum of a spectral component having the detected peak with a reference value; and
determining a frequency band of a spectral component having a narrower full width at half maximum than the reference value to be the frequency band of the first disturbance noise.

*FIG. 1A*

*FIG. 1B*

*FIG. 2A*

10b

MANUFACTURING
APPARATUS

30

31

42

25

40

HEATER

41

23

32

1

12

ANALYZER

11

MANUFACTURING
CONTROLLER

*FIG. 2B*

40

41

1 ⎨ 23
    12

ANALYZER

FIG. 3

FIG. 4

*FIG. 5*

FIG. 6

## FIG. 7A

FREQUENCY SPECTRUM OF
HIGH-FREQUENCY DISTURBANCE NOISE
(WITHIN FREQUENCY BAND OF AE WAVE)

SPECTRAL INTENSITY

FREQUENCY

## FIG. 7B

FREQUENCY SPECTRUM OF AE WAVE

SPECTRAL INTENSITY

FREQUENCY

FIG. 8

602,621

NOISE CUTTING CIRCUIT

Y0 → BSF[1] → BSF[2] → BSF[3] → BSF[4] → BSF[5] → BSF[6] → Y1

620

FREQUENCY ANALYZING CIRCUIT

## FIG. 9A

## FIG. 9B

## FIG. 10

START

S101
EXTRACT INPUT TIME-SERIES DATA
BASED ON A UNIT TIME LENGTH

S102
CALCULATE FREQUENCY SPECTRUM BY
SHORT-TIME FOURIER TRANSFORM

S103
DETECT PEAK IN FREQUENCY SPECTRUM

S104
SPECTRUM COMPONENT HAVING
DETECTED PEAK IS BASED ON
HIGH-FREQUENCY DISTURBANCE NOISE?
(FWHM OF SPECTRUM COMPONENT
< REFERENCE VALUE?) — NO

YES

S105
SET FREQUENCY BAND OF RELEVANT
SPECTRUM COMPONENT TO BSF

S106
NO — ALL PEAKS DETERMINED ?

YES

S107
CUT HIGH-FREQUENCY DISTURBANCE
NOISE BY USE OF BSF

END

## *FIG. 11A*

WAVEFORM (Y0) FOR ONE LAYER BEFORE CUTTING
HIGH-FREQUENCY DISTURBANCE NOISE

T1b1: WAITING PERIOD
(PREHEATING PERIOD)   T1a: IRRADIATION
                           PERIOD
T1b2:WAITING PERIOD

## *FIG. 11B*

WAVEFORM (Y1) FOR ONE LAYER AFTER CUTTING
HIGH-FREQUENCY DISTURBANCE NOISE

T1b1: WAITING PERIOD
(PREHEATING PERIOD)   T1a: IRRADIATION
                           PERIOD
T1b2:WAITING PERIOD

*FIG. 12A*

*FIG. 12B*

*FIG. 13*

*FIG. 14*

56

AE WAVE ANALYSIS CIRCUIT

AEW →

560
ENVELOPE
DETECTING
CIRCUIT
→
561
AE EVENT
DETECTING
CIRCUIT
→
562
FEATURE-
VOLUME
CALCULATING
CIRCUIT
→ FV

563
THRESHOLD-
VALUE
SETTING
CIRCUIT

AE ENERGY

AE DURATION

AE WAVE
OCCURRENCE
TIME

⋮

## FIG. 15A

CN:AE COUNT

AM:
PEAK
AMPLITUDE

VOLTAGE
THRESHOLD
VALUE
V1

AEW:AE WAVE

Tr:RISE TIME

t3

tA

Te:AE DURATION

tB

EVENT START TIME POINT

EVENT END TIME POINT

AEE:AE EVENT

# FIG. 15B

VOLTAGE

AM:
PEAK
AMPLITUDE

AEW:AE WAVE

0

TIME

ES:ENVELOPE
DETECTION SIGNAL

FULL-WAVE RECTIFICATION,
ENVELOPE DETECTION

VOLTAGE

VOLTAGE
THRESHOLD VALUE
VH
VL

0

TIME

AEE:AE EVENT

VOLTAGE

Te:AE DURATION

0

tA          tB

TIME

AE EVENT PULSE SIGNAL
(AE EVENT DETECTION SIGNAL)

*FIG. 16A*

AEW:AE WAVE

*FIG. 16B*

ES:ENVELOPE
DETECTION SIGNAL

*FIG. 17*

51

CIRCUIT FOR QUALITY DETERMINATION

513

FV:FEATURE VOLUME

| CIRCUIT FOR DETERMINATION OF PRESENCE/ABSENCE OF DEFECTS |

510

WITHOUT DEFECT

WITH DEFECT

FV

511

| CIRCUIT FOR IDENTIFICATION OF STATE OF DEFECTS |

512

| CIRCUIT FOR ESTIMATION OF CAUSE OF DEFECTS |

| OUTPUT CONTROLLING CIRCUIT |

57

514

| DEFECT DB INFORMATION |

| ALERT OUTPUT |

| GRAPH DISPLAY |

| OPERATION STOP INSTRUCTIONS |

| SIGNAL WAVEFORM DISPLAY |

FIG. 18

520

☐ DEFECT DETECTING FUNCTION

SETTING

SETTING NAME [ SETTING 1 FOR AM ▼ ]

[SETTING VALUE FOR NOISE CUTTING]

NUMBER OF BSFs TO BE CONFIGURED [ 3 ▼ ]

FWHM REFERENCE VALUE(kHz) [ 20 ▼ ]

[THRESHOLD VALUE FOR AE WAVE DETECTION]

HIGH-VOLTAGE SIDE THRESHOLD VALUE VH (mV) [ 100 ▼ ]

LOW-VOLTAGE SIDE THRESHOLD VALUE VL(mV) [ AUTO ▼ ]

[ OK ] [ CANCEL ]

*FIG. 19*

*FIG. 20*

$$\Delta L = \frac{1}{2} \cdot \Delta t \cdot C$$

$$\Delta t = t2 - t1$$

TIME (ms)

*FIG. 21*

*FIG. 22*

## FIG. 23

```
              ┌─────────────┐
              │    START    │
              └──────┬──────┘
                     │
S200 ~  ┌────────────▼──────────────┐
        │ PREPARE DEFECT DB INFORMATION │
        └────────────┬──────────────┘
                     │
                     │          ┌──────────────────┐
S201 ~    ╱──────────▼─────────╲  No                │
        ╱    MANUFACTURING       ╲──────────────────┘
        ╲    PERIOD STARTED?      ╱
          ╲──────────┬──────────╱
                     │ Yes
       ┌─────────────▼──────────────────┐
S202 ~ │ MONITOR SENSING SIGNAL OUTPUT   │
       │ FROM ACOUSTIC EMISSION SENSOR   │
       └─────────────┬──────────────────┘
                     │          ┌──────────────────┐
S203 ~    ╱──────────▼─────────╲  No                │
        ╱    AE EVENT DETECTED?  ╲──────────────────┘
          ╲──────────┬──────────╱
                     │ Yes
       ┌─────────────▼──────────────────┐
S204 ~ │     CALCULATE FEATURE VOLUME    │
       └─────────────┬──────────────────┘
                     │
       ┌─────────────▼──────────────────┐
       │     IDENTIFY DEFECT STATE AS    │
S205 ~ │   IDENTIFIED DEFECT STATE WITH  │
       │ REFERENCE TO DEFECT DB INFORMATION │
       └─────────────┬──────────────────┘
                     │
       ┌─────────────▼──────────────────┐
       │   CREATE AND STORE DEFECT STATE │
       │ INFORMATION MAKING CORRESPONDENCE │
S206 ~ │   BETWEEN IDENTIFIED DEFECT STATE │
       │     AND MANUFACTURING TIME      │
       └─────────────┬──────────────────┘
                     │
S207 ~     ╱─────────▼─────────╲
      No  ╱    MANUFACTURING     ╲
  ◄──────╲    PERIOD ENDED?      ╱
           ╲─────────┬─────────╱
                     │ Yes
       ┌─────────────▼──────────────────┐
S208 ~ │  DETERMINE GOOD OR BAD BASED ON │
       │     DEFECT STATE INFORMATION    │
       └─────────────┬──────────────────┘
                     │
              ┌──────▼──────┐
              │     END     │
              └─────────────┘
```

## FIG. 24

```
                    ┌─────────────┐
                    │    START    │
                    └──────┬──────┘
                           │
S300 ──┤  ┌────────────────▼────────────────┐
          │   PREPARE DEFECT DB INFORMATION  │
          └────────────────┬────────────────┘
                           │
S301          ┌────────────▼────────────┐      No
              <   POST-MANUFACTURING     >──────┐
              <     PERIOD STARTED?      >      │
              └────────────┬────────────┘      │
                       Yes │                    │
S302 ──┤  ┌────────────────▼────────────────┐  │
          │    RESET DETECTION TIME (TIMER)  │  │
          └────────────────┬────────────────┘  │
                           │                     │
          ┌────────────────▼────────────────┐  │
          │      MONITOR SENSING SIGNAL      │  │
S303 ──┤  │          OUTPUT FROM             │  │
          │    ACOUSTIC EMISSION SENSOR      │  │
          └────────────────┬────────────────┘  │
                           │                     │
S304          ┌────────────▼────────────┐      No
              <     AE EVENT DETECTED?    >──────┘
              └────────────┬────────────┘
                       Yes │
S305 ──┤  ┌────────────────▼────────────────┐
          │     CALCULATE FEATURE VOLUME     │
          └────────────────┬────────────────┘
                           │
          ┌────────────────▼────────────────┐
          │  IDENTIFY DEFECT STATE BASED ON  │
S306 ──┤  │   DEFECT DB INFORMATION, AND     │
          │  OUTPUT IDENTIFIED DEFECT STATE  │
          └────────────────┬────────────────┘
                           │
          ┌────────────────▼────────────────┐
          │     CREATE AND STORE DEFECT      │
          │    STATE INFORMATION MAKING      │
S307 ──┤  │ CORRESPONDENCE BETWEEN IDENTIFIED│
          │  DEFECT STATE AND DETECTION TIME │
          └────────────────┬────────────────┘
                           │
S308                        │
         No   ┌─────────────▼───────────┐
        ┌─────<   POST-MANUFACTURING     >
        │     <     PERIOD ENDED?        >
        │     └─────────────┬───────────┘
        │               Yes │
        │ ┌─────────────────▼───────────────┐
S309 ─┤ │ DETERMINE GOOD OR BAD BASED ON    │
        │ │     DEFECT STATE INFORMATION     │
        │ └─────────────────┬───────────────┘
                           │
                    ┌──────▼──────┐
                    │     END     │
                    └─────────────┘
```

**EP 4 450 966 A1**

| | INTERNATIONAL SEARCH REPORT | International application No. |
|---|---|---|
| | | **PCT/JP2022/039977** |

**A. CLASSIFICATION OF SUBJECT MATTER**

*G01N 29/14*(2006.01)i; *B33Y 10/00*(2015.01)i; *B33Y 30/00*(2015.01)i; *B33Y 50/02*(2015.01)i; *G01N 29/04*(2006.01)i; *G01N 29/44*(2006.01)i

FI: G01N29/14; G01N29/04; G01N29/44; B33Y10/00; B33Y30/00; B33Y50/02

According to International Patent Classification (IPC) or to both national classification and IPC

**B. FIELDS SEARCHED**

Minimum documentation searched (classification system followed by classification symbols)

G01N29/00-G01N29/52; B33Y10/00-B33Y99/00; B22F3/00-B22F3/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-523011 A (RENISHAW PUBLIC LIMITED COMPANY) 16 August 2018 (2018-08-16)<br>entire text | 1-15 |
| A | JP 2017-094728 A (GENERAL ELECTRIC COMPANY) 01 June 2017 (2017-06-01)<br>entire text | 1-15 |
| A | JP 2021-076533 A (MITSUBISHI HEAVY IND LTD) 20 May 2021 (2021-05-20)<br>entire text | 1-15 |
| A | JP 54-085784 A (HITACHI LTD) 07 July 1979 (1979-07-07)<br>entire text | 1-15 |
| A | JP 2013-033726 A (TOKYO ELECTRON LTD) 14 February 2013 (2013-02-14)<br>entire text | 1-15 |
| A | WO 2019/230962 A1 (MITSUBISHI ELECTRIC CORPORATION) 05 December 2019 (2019-12-05)<br>entire text | 1-15 |

☑ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

46

**INTERNATIONAL SEARCH REPORT**

International application No.

**PCT/JP2022/039977**

C. DOCUMENTS CONSIDERED TO BE RELEVANT

| Category* | Citation of document, with indication, where appropriate, of the relevant passages | Relevant to claim No. |
|---|---|---|
| A | US 2021/0245250 A1 (RENISHAW PLC) 12 August 2021 (2021-08-12)<br>entire text | 1-15 |

Form PCT/ISA/210 (second sheet) (January 2015)

INTERNATIONAL SEARCH REPORT
Information on patent family members

International application No.

**PCT/JP2022/039977**

| Patent document cited in search report | | | Publication date (day/month/year) | Patent family member(s) | | | Publication date (day/month/year) |
|---|---|---|---|---|---|---|---|
| JP | 2018-523011 | A | 16 August 2018 | WO | 2016/198885 | A1 | |
| JP | 2017-094728 | A | 01 June 2017 | US | 2017/0146488 | A1 | |
| JP | 2021-076533 | A | 20 May 2021 | US | 2021/0140928 | A1 | |
| JP | 54-085784 | A | 07 July 1979 | (Family: none) | | | |
| JP | 2013-033726 | A | 14 February 2013 | US | 2013/0056154 | A1 | |
| WO | 2019/230962 | A1 | 05 December 2019 | (Family: none) | | | |
| US | 2021/0245250 | A1 | 12 August 2021 | WO | 2020/008171 | A1 | |

Form PCT/ISA/210 (patent family annex) (January 2015)

48

**EP 4 450 966 A1**

**REFERENCES CITED IN THE DESCRIPTION**

**Patent documents cited in the description**

- JP 2017094728 A